# EUROPEAN PATENT APPLICATION

(11) **EP 4 780 064 A1**
(43) Date of publication of application: **22.07.2026**
(21) Application number: 24870130.2
(22) Date of filing: 09.08.2024
(51) Int. Cl.: H04W 28/24

(54) **COMMUNICATION METHOD AND APPARATUS**

(30) Priority: 27.09.2023 CN 202311273510
(71) Applicant: HUAWEI TECHNOLOGIES CO., LTD., Shenzhen 518129 (CN)
(72) Inventor: LI, Kuikui, Shenzhen, Guangdong 518129 (CN); ZENG, Qinghai, Shenzhen, Guangdong 518129 (CN)
(74) Representative: Körber, Martin Hans
(86) International application number: PCT/CN2024/111206
(87) International publication number: WO 2025/066582

(57) **Abstract**

A communication method and apparatus, relating to the communication field, are disclosed, so that an access network device and/or a user plane network element can provide a local service for a terminal device. The method includes: A session management network element obtains, based on obtained first indication information, QoS information corresponding to a service provided by an access network device and/or a user plane network element for a terminal device, and sends the QoS information to the access network device and/or the user plane network element, so that the access network device establishes a radio bearer that is between the access network device and the terminal device and that is used for the service, and/or the user plane network element establishes a tunnel that is between the user plane network element and the access network device and that is used for the service, to implement a requirement for providing a local service for the terminal device by the access network device provides and/or the user plane network element.

## Description

This application claims priority to Chinese Patent Application No. 202311273510.1, filed with the China National Intellectual Property Administration on September 27, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

A 6th generation (6th generation, 6G) network needs to support scheduling of artificial intelligence (artificial intelligence, AI) resources and processing of an ultra-large amount of data, to reduce a computation amount and energy consumption of a terminal device, so as to meet a requirement on a capability of a lighter, more immersive, and more intelligent terminal device. Therefore, a 6G network architecture shifts from "connection-centric" to "task-centric". A conventional "connection-centric" network architecture aims to provide connection channels required for data communication between terminal devices and between a terminal device and an application server, as well as corresponding lifecycle management mechanisms and communication quality of service (quality of service, QoS). A "task-centric" network architecture not only requires a network to provide connection services, but also requires the network to perform collaboration and allocation of computational power, connections, algorithms, and data resources of network nodes to jointly achieve a specific goal. However, how a network element node (for example, an access network device) in the network provides a data or computing service for the terminal device becomes an urgent problem to be resolved.

### SUMMARY

Embodiments of this application provide a communication method and apparatus, so that an access network device and/or a user plane network element can locally provide a service for a terminal device.

To achieve the foregoing objective, this application uses the following technical solutions.

According to a first aspect, a communication method is provided. The method may be performed by a session management network element, or may be performed by a part of the session management network element, for example, a processor, a chip, or a chip system of the session management network element, or may be implemented by a logical module or software that can implement all or some of functions of the session management network element. The method includes: obtaining first indication information, where the first indication information indicates a service provided by an access network device and/or a user plane network element for a terminal device; obtaining, based on the first indication information, quality of service QoS information corresponding to the service; and sending the QoS information to the access network device and/or the user plane network element.

According to the communication method, the session management network element obtains, based on the first indication information, the QoS information corresponding to the service provided by the access network device and/or the user plane network element for the terminal device, and sends the QoS information to the access network device and/or the user plane network element, so that the access network device establishes a radio bearer that is between the access network device and the terminal device and that is used for the service, and/or the user plane network element establishes a tunnel that is between the user plane network element and the access network device and that is used for the service, to implement a requirement for providing a local service for the terminal device by the access network device and/or the user plane network element. Compared with providing a data service by a data network, this reduces a signaling interaction process, and can improve service efficiency. In addition, a node that provides the service is closer to a user, so that a transmission delay can be reduced, reliability can be improved, and quality of service can be ensured.

In a possible design solution, the service may include: executing, by the access network device and/or the user plane network element, a compute task requested by the terminal device, and sending a result of the compute task to the terminal device; or the service may include: obtaining, by the access network device and/or the user plane network element, data or an artificial intelligence AI model requested by the terminal device, and sending the data or the AI model to the terminal device. Therefore, compared with providing a computing service, a data service, or an AI model service by a cloud server in the data network, the communication method can reduce a transmission delay of the computing service, the data service, or the AI model service, and ensure quality of service.

In a possible design solution, obtaining the first indication information may include: receiving the first indication information from the terminal device. Therefore, the session management network element may obtain, based on the first indication information sent by the terminal device, the QoS information corresponding to the service, to indicate the access network device and/or the user plane network element to establish a data channel that meets a service requirement, and provide the local service for the terminal device. This can ensure quality of service.

In a possible design solution, receiving the first indication information from the terminal device may include: receiving a session establishment request message from the terminal device, where the session establishment request message includes the first indication information, and the session establishment request message is used by the terminal device to request to establish a session for the service.

In a possible design solution, obtaining the first indication information may include: receiving the first indication information from an operation management network element. Therefore, the session management network element may obtain, based on the first indication information sent by the network management system, the QoS information corresponding to the service, to indicate the access network device and/or the user plane network element to establish a data channel that meets a service requirement, and provide the local service for the terminal device. This can ensure quality of service.

In a possible design solution, the communication method provided in this embodiment of this application may further include: receiving second indication information from the access network device, where the second indication information indicates that the first radio bearer that is between the access network device and the terminal device and that is used for the service is successfully established. Therefore, the session management network element may further learn of a radio bearer establishment status by receiving the second indication information.

In a possible design solution, the first radio bearer may include at least one of a data radio bearer, a signaling radio bearer, or a computing radio bearer, and the computing radio bearer is used to transmit control information and/or data information related to the service. In this embodiment of this application, both the control information and data information related to the service may be transmitted via the signaling radio bearer or the computing radio bearer, or the control information is transmitted via the signaling radio bearer or the computing radio bearer, and the data information is transmitted via the data radio bearer. A transmission manner is flexible.

In a possible design solution, the QoS information may include computational power requirement information for executing the service and data transmission requirement information for executing the service. Therefore, the access network device and/or the user plane network element may ensure a computational power requirement and a transmission requirement based on the QoS information.

According to a second aspect, a communication method is provided. The method may be performed by a terminal device, or may be performed by a part of the terminal device, for example, a processor, a chip, or a chip system of the terminal device, or may be implemented by a logical module or software that can implement all or some functions of the terminal device. The method includes: sending first indication information, where the first indication information indicates a service provided by an access network device and/or a user plane network element for a terminal device; and receiving a first configuration from the access network device, where the first configuration is used to configure the terminal device to establish a first radio bearer that is between the terminal device and the access network device and that is used for the service.

According to the communication method, the terminal device may trigger, by sending the first indication information, the access network device and/or the user plane network element to provide a local service, and complete, based on the first configuration sent by the access network device, establishment of the radio bearer that is between the terminal device and the access network device and that is used for the service, so that the access network device provides the local service and/or the user plane network element provides the local service for the terminal device.

In a possible design solution, the service may include: executing, by the access network device and/or the user plane network element, a compute task requested by the terminal device, and sending a result of the compute task to the terminal device; or the service may include: obtaining, by the access network device and/or the user plane network element, data or an artificial intelligence AI model requested by the terminal device, and sending the data or the AI model to the terminal device.

In a possible design solution, sending the first indication information may include: sending the first indication information to a session management network element.

In a possible design solution, sending the first indication information to the session management network element may include: sending a session establishment request message to the session management network element, where the session establishment request message includes the first indication information, and the session establishment request message is used by the terminal device to request to establish a session for the service.

In a possible design solution, sending the first indication information may include: sending the first indication information to the access network device.

In a possible design solution, the first indication information may be carried in a radio resource control RRC message.

In a possible design solution, the communication method provided in this embodiment of this application may further include: sending, to the access network device, QoS information corresponding to the service.

In a possible design solution, the first indication information and the QoS information may be carried in a same message, to reduce signaling overheads.

In a possible design solution, the QoS information may include computational power requirement information for executing the service and data transmission requirement information for executing the service.

In a possible design solution, the first configuration may be carried in a drb-ToAddModList information element, to reduce signaling overheads.

In a possible design solution, the first configuration may be carried in an RRC message, for example, an RRC setup message or an RRC reconfiguration message.

In a possible design solution, the terminal device and the access network device may include a computing resource control entity, and the computing resource control entity is configured to process control information and/or data information related to the service.

In a possible design solution, the first configuration and/or the first indication information may be carried in a computing resource control message.

In a possible design solution, the communication method provided in this embodiment of this application may further include: receiving, via the first radio bearer, the data information related to the service from the access network device.

In a possible design solution, the first indication information and/or the first configuration may be transmitted via a second radio bearer, the second radio bearer is at least one of a signaling radio bearer or a computing radio bearer, and the computing radio bearer is used to transmit the control information and/or data information related to the service.

In a possible design solution, the second radio bearer may be a common signaling radio bearer, and the common signaling radio bearer is used to transmit all control information related to the service.

In a possible design solution, the first radio bearer may include at least one of a data radio bearer, a signaling radio bearer, or a computing radio bearer, and the computing radio bearer is used to transmit the control information and/or data information related to the service.

For technical effect of the method according to the second aspect, refer to the descriptions of the technical effect of the method according to the first aspect. Details are not described herein again.

According to a third aspect, a communication method is provided. The method may be performed by an access network device, or may be performed by a part of the access network device, for example, a processor, a chip, or a chip system of the access network device, or may be implemented by a logical module or software that can implement all or some functions of the access network device. The method includes: obtaining quality of service QoS information corresponding to a service, where the service is provided by an access network device for a terminal device; and sending a first configuration to the terminal device, where the first configuration is determined based on the QoS information, and the first configuration is used to configure the terminal device to establish a first radio bearer that is between the terminal device and the access network device and that is used for the service.

In a possible design solution, the service may include: executing, by the access network device and/or the user plane network element, a compute task requested by the terminal device, and sending a result of the compute task to the terminal device; or the service may include: obtaining, by the access network device and/or the user plane network element, data or an artificial intelligence AI model requested by the terminal device, and sending the data or the AI model to the terminal device.

In a possible design solution, obtaining the QoS information corresponding to the service may include: receiving the QoS information corresponding to the service from a session management network element.

In a possible design solution, the communication method provided in this embodiment of this application may further include: sending second indication information to the session management network element, where the second indication information indicates that the first radio bearer that is between the access network device and the terminal device and that is used for the service is successfully established.

In a possible design solution, obtaining the QoS information corresponding to the service may include: receiving the QoS information corresponding to the service from the terminal device.

In a possible design solution, the communication method provided in this embodiment of this application may further include: receiving first indication information from the terminal device, where the first indication information indicates the service provided by the access network device for the terminal device.

In a possible design solution, the first indication information may be carried in a radio resource control RRC message.

In a possible design solution, the first indication information and the QoS information may be carried in a same message.

In a possible design solution, the first configuration may be carried in a drb-ToAddModList information element.

In a possible design solution, the first configuration may be carried in an RRC message, for example, an RRC setup message or an RRC reconfiguration message.

In a possible design solution, the terminal device and the access network device may include a computing resource control entity, and the computing resource control entity is configured to process control information and/or data information related to the service.

In a possible design solution, the first configuration and/or the first indication information may be carried in a computing resource control message.

In a possible design solution, the first indication information and/or the first configuration may be transmitted via a second radio bearer, the second radio bearer is at least one of a signaling radio bearer or a computing radio bearer, and the computing radio bearer is used to transmit the control information and/or data information related to the service.

In a possible design solution, the second radio bearer may be a common signaling radio bearer, and the common signaling radio bearer is used to transmit all control information related to the service.

In a possible design solution, the first radio bearer may include at least one of a data radio bearer, a signaling radio bearer, or a computing radio bearer, and the computing radio bearer is used to transmit the control information and/or data information related to the service.

In a possible design solution, the QoS information may include computational power requirement information for executing the service and data transmission requirement information for executing the service.

In a possible design solution, the communication method provided in this embodiment of this application may further include: sending, via the first radio bearer, the data information related to the service to the terminal device.

For technical effect of the method according to the third aspect, refer to the technical effect of the method according to the first aspect or the second aspect. Details are not described herein again.

According to a fourth aspect, a communication apparatus is provided, to implement the foregoing methods. The communication apparatus may be the session management network element in the first aspect, or an apparatus including the session management network element, or an apparatus included in the session management network element, for example, a chip. The communication apparatus includes a corresponding module, unit, or means (means) for implementing the method according to the first aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to obtain first indication information, where the first indication information indicates a service provided by an access network device and/or a user plane network element for a terminal device. The processing module is further configured to obtain, based on the first indication information, quality of service QoS information corresponding to the service. The transceiver module is configured to send the QoS information to the access network device and/or the user plane network element.

In a possible design solution, the service may include: executing, by the access network device and/or the user plane network element, a compute task requested by the terminal device, and sending a result of the compute task to the terminal device; or the service may include: obtaining, by the access network device and/or the user plane network element, data or an artificial intelligence AI model requested by the terminal device, and sending the data or the AI model to the terminal device.

In a possible design solution, that the processing module is configured to obtain the first indication information may include: The processing module is configured to control the transceiver module to receive the first indication information from the terminal device.

In a possible design solution, that the processing module is configured to control the transceiver module to receive the first indication information from the terminal device may include: The processing module is configured to control the transceiver module to receive a session establishment request message from the terminal device, where the session establishment request message includes the first indication information, and the session establishment request message is used by the terminal device to request to establish a session for the service.

In a possible design solution, that the processing module is configured to obtain the first indication information may include: The processing module is configured to control the transceiver module to receive the first indication information from an operation management network element.

In a possible design solution, the transceiver module is further configured to receive second indication information from the access network device, where the second indication information indicates that the first radio bearer that is between the access network device and the terminal device and that is used for the service is successfully established.

In a possible design solution, the first radio bearer may include at least one of a data radio bearer, a signaling radio bearer, or a computing radio bearer, and the computing radio bearer is used to transmit the control information and/or data information related to the service.

In a possible design solution, the QoS information may include computational power requirement information for executing the service and data transmission requirement information for executing the service.

According to a fifth aspect, a communication apparatus is provided, to implement the foregoing methods. The communication apparatus may be the terminal device in the second aspect, an apparatus including the terminal device, or an apparatus included in the terminal device, for example, a chip. The communication apparatus includes a corresponding module, unit, or means (means) for implementing the method according to the second aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to control the transceiver module to send first indication information, where the first indication information indicates a service provided by an access network device and/or a user plane network element for a terminal device. The processing module is further configured to control receiving of a first configuration from the access network device, where the first configuration is used to configure the terminal device to establish a first radio bearer that is between the terminal device and the access network device and that is used for the service.

In a possible design solution, the service may include: executing, by the access network device and/or the user plane network element, a compute task requested by the terminal device, and sending a result of the compute task to the terminal device; or the service may include: obtaining, by the access network device and/or the user plane network element, data or an artificial intelligence AI model requested by the terminal device, and sending the data or the AI model to the terminal device.

In a possible design solution, that the processing module is configured to control the transceiver module to send the first indication information may include: The processing module is configured to control the transceiver module to send the first indication information to a session management network element.

In a possible design solution, that the processing module is configured to control the transceiver module to send the first indication information to the session management network element may include: The processing module is configured to control the transceiver module to send a session establishment request message to the session management network element, where the session establishment request message includes the first indication information, and the session establishment request message is used by the terminal device to request to establish a session for the service.

In a possible design solution, that the processing module is configured to control the transceiver module to send the first indication information may include: The processing module is configured to control the transceiver module to send the first indication information to the access network device.

In a possible design solution, the first indication information may be carried in a radio resource control RRC message.

In a possible design solution, the processing module is further configured to control the transceiver module to send QoS information corresponding to the service to the access network device.

In a possible design solution, the first indication information and the QoS information may be carried in a same message.

In a possible design solution, the QoS information may include computational power requirement information for executing the service and data transmission requirement information for executing the service.

In a possible design solution, the first configuration may be carried in a drb-ToAddModList information element.

In a possible design solution, the first configuration may be carried in an RRC message, for example, an RRC setup message or an RRC reconfiguration message.

In a possible design solution, the terminal device and the access network device may include a computing resource control entity, and the computing resource control entity is configured to process control information and/or data information related to the service.

In a possible design solution, the first configuration and/or the first indication information may be carried in a computing resource control message.

In a possible design solution, the processing module is configured to control the transceiver module to receive, via the first radio bearer, the data information related to the service from the access network device.

In a possible design solution, the first indication information and/or the first configuration may be transmitted via a second radio bearer, the second radio bearer is at least one of a signaling radio bearer or a computing radio bearer, and the computing radio bearer is used to transmit the control information and/or data information related to the service.

In a possible design solution, the second radio bearer may be a common signaling radio bearer, and the common signaling radio bearer is used to transmit all control information related to the service.

In a possible design solution, the first radio bearer may include at least one of a data radio bearer, a signaling radio bearer, or a computing radio bearer, and the computing radio bearer is used to transmit the control information and/or data information related to the service.

According to a sixth aspect, a communication apparatus is provided, to implement the foregoing methods. The communication apparatus may be the access network device in the third aspect, or an apparatus including the access network device, or an apparatus included in the access network device, for example, a chip. The communication apparatus includes a corresponding module, unit, or means (means) for implementing the method according to the third aspect. The module, unit, or means may be implemented by hardware, software, or hardware executing corresponding software. The hardware or the software includes one or more modules or units corresponding to the foregoing functions.

In some possible designs, the communication apparatus includes a processing module and a transceiver module. The processing module is configured to obtain quality of service QoS information corresponding to a service, where the service is provided by an access network device for a terminal device. The transceiver module is configured to send a first configuration information to the terminal device, where the first configuration is determined based on the QoS information, and the first configuration is used to configure the terminal device to establish a first radio bearer that is between the terminal device and the access network device and that is used for the service.

In a possible design solution, the service may include: executing, by the access network device and/or the user plane network element, a compute task requested by the terminal device, and sending a result of the compute task to the terminal device; or the service may include: obtaining, by the access network device and/or the user plane network element, data or an artificial intelligence AI model requested by the terminal device, and sending the data or the AI model to the terminal device.

In a possible design solution, that the processing module is configured to obtain the QoS information corresponding to the service may include: The processing module is configured to control the transceiver module to receive the QoS information corresponding to the service from a session management network element.

In a possible design solution, the transceiver module is further configured to send second indication information to the session management network element, where the second indication information indicates that the first radio bearer that is between the access network device and the terminal device and that is used for the service is successfully established.

In a possible design solution, that the processing module is configured to obtain the QoS information corresponding to the service may include: The processing module is configured to control the transceiver module to receive the QoS information corresponding to the service from the terminal device.

In a possible design solution, the transceiver module is further configured to receive first indication information from the terminal device, where the first indication information indicates the service provided by the access network device for the terminal device.

In a possible design solution, the first indication information may be carried in a radio resource control RRC message.

In a possible design solution, the first indication information and the QoS information may be carried in a same message.

In a possible design solution, the first configuration may be carried in a drb-ToAddModList information element.

In a possible design solution, the first configuration may be carried in an RRC message, for example, an RRC setup message or an RRC reconfiguration message.

In a possible design solution, the terminal device and the access network device may include a computing resource control entity, and the computing resource control entity is configured to process control information and/or data information related to the service.

In a possible design solution, the first configuration and/or the first indication information may be carried in a computing resource control message.

In a possible design solution, the first indication information and/or the first configuration may be transmitted via a second radio bearer, the second radio bearer is at least one of a signaling radio bearer or a computing radio bearer, and the computing radio bearer is used to transmit the control information and/or data information related to the service.

In a possible design solution, the second radio bearer may be a common signaling radio bearer, and the common signaling radio bearer is used to transmit all control information related to the service.

In a possible design solution, the first radio bearer may include at least one of a data radio bearer, a signaling radio bearer, or a computing radio bearer, and the computing radio bearer is used to transmit the control information and/or data information related to the service.

In a possible design solution, the QoS information may include computational power requirement information for executing the service and data transmission requirement information for executing the service.

In a possible design solution, the transceiver module is further configured to send, via the first radio bearer, the data information related to the service to the terminal device.

With reference to any one of the third aspect to the sixth aspect, in a possible design solution, the transceiver module may include a receiving module and a sending module. The sending module is configured to implement a sending function of the communication apparatus according to any one of the third aspect to the sixth aspect, and the receiving module is configured to implement a receiving function of the communication apparatus according to any one of the third aspect to the sixth aspect.

With reference to any one of the third aspect to the sixth aspect, in a possible design solution, the communication apparatus according to any one of the third aspect to the sixth aspect may further include a storage module, and the storage module stores a program or instructions. When the processing module executes the program or the instructions, the communication apparatus according to any one of the third aspect to the sixth aspect can perform the communication method according to any one of the first aspect to the third aspect.

According to a seventh aspect, a communication apparatus is provided (for example, the communication apparatus may be a chip or a chip system). The communication apparatus includes a processor, configured to implement functions in any one of the foregoing aspects.

In a possible design solution, the communication apparatus may further include a memory, and the memory is configured to store necessary program instructions and data. The processor is coupled to the memory, and the processor is configured to execute a computer program or instructions stored in the memory, so that the communication apparatus performs the method according to any one of the possible implementations of the first aspect to the third aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the processor may be integrated with the memory.

In some possible designs, when the apparatus is a chip system, the apparatus may include a chip, or may include a chip and another discrete device.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect to the third aspect through a logic circuit or by executing code instructions.

According to a ninth aspect, a communication apparatus is provided. The communication apparatus may be a session management network element, or may be a one-to-one corresponding module or unit (for example, a chip, a chip system, or a circuit) in the session management network element for performing the method/operation/step/action described in the first aspect, or may be used in cooperation with the session management network element. Alternatively, the communication apparatus may be a terminal device, or may be a one-to-one corresponding module or unit (for example, a chip, a chip system, or a circuit) in the terminal device for performing the method/operation/step/action described in the second aspect, or may be used in cooperation with the terminal device. Alternatively, the communication apparatus may be an access network device, or may be a one-to-one corresponding module or unit (for example, a chip, a chip system, or a circuit) in the access network device for performing the method/operation/step/action described in the third aspect, or may be used in cooperation with the access network device.

It may be understood that, when the communication apparatus provided in the seventh aspect or the ninth aspect is a chip, the sending action/function may be understood as an output, and the receiving action/function may be understood as an input.

According to a tenth aspect, a computer-readable storage medium is provided. The computer-readable storage medium stores a computer program or instructions. When the computer program or the instructions are run on a communication apparatus, the communication apparatus is enabled to perform the method according to any one of the first aspect to the third aspect.

According to an eleventh aspect, a computer program product including instructions is provided, including computer program code. When the computer program code runs on a communication apparatus, the communication apparatus is enabled to perform the method according to any one of the first aspect to the third aspect.

According to a twelfth aspect, a communication system is provided, used in a terminal device configured to implement the method in the second aspect and an access network device configured to implement the method in the third aspect.

According to a thirteenth aspect, a communication system is provided, including a session management network element configured to implement the method in the first aspect, a terminal device configured to implement the method in the second aspect, and an access network device configured to implement the method in the third aspect.

### BRIEF DESCRIPTION OF DRAWINGS

FIG. 1 is a diagram of an XaaS system architecture;
FIG. 2 is a diagram of an architecture of a computational power network that can be used to schedule a compute task;
FIG. 3 is a diagram of an architecture of a communication system according to an embodiment of this application;
FIG. 4A to FIG. 4D are diagrams of a protocol stack architecture applicable to completion of a computing service between a terminal device and an access network device according to an embodiment of this application;
FIG. 5 is a diagram of an architecture of an access network device based on CU-DU separation according to an embodiment of this application;
FIG. 6A and FIG. 6B are diagrams of a structure of an access network device based on an O-RAN architecture according to an embodiment of this application;
FIG. 7 is a schematic flowchart of a communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

To better understand embodiments of this application, the following descriptions are provided before embodiments of this application are described.

First, in embodiments of this application, "indicate" may include "directly indicate" and "indirectly indicate". When a piece of "indication information" is described as indicating A, the indication information may directly indicate A or indirectly indicate A, but it does not indicate that the indication information definitely carries A.

Information indicated by indication information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent. In addition, a common part of all the pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For specific details of various indication manners, refer to related descriptions in an existing implementation. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control (radio resource control, RRC) signaling, medium access control (medium access control, MAC) layer signaling, and physical layer signaling. The MAC layer signaling includes, for example, a MAC-control element (control element, CE). The physical (physical, PHY) layer signaling includes, for example, downlink control information (downlink control information, DCI).

Second, in embodiments of this application, first, second, and various numbers are merely used for distinguishing for ease of description, and are not used to limit the scope of embodiments of this application. For example, the numbers are used to distinguish between different indication information. For another example, a first network area and a second network area are merely intended to distinguish between different areas, and are not intended to limit a sequence thereof. A person skilled in the art may understand that the words such as "first" and "second" do not limit a quantity and an execution sequence, and the words such as "first" and "second" are not limited to be necessarily different.

Third, in embodiments of this application, descriptions such as "when", "in a case", and "if" mean that a device (for example, a terminal device or a network device) performs corresponding processing in an objective situation, and are not intended to limit time, and the device (for example, the terminal device or the network device) is not required to perform a determining action during implementation; and do not mean any other limitation.

Fourth, in embodiments of this application, words such as "example" or "for example" is used to give an example, an illustration, or a description. Any embodiment or design solution described as "example" or "for example" in embodiments of this application should not be explained as being more preferred or having more advantages than another embodiment or design solution. Exactly, use of the terms such as "example" or "for example" is intended to present a related concept in a specific manner for ease of understanding.

Fifth, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of a plurality of items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Communication systems, applicable network elements, and related terms are described.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a worldwide interoperability for microwave access (worldwide interoperability for microwave access, WiMAX) communication system, a 4th generation (4th generation, 4G) mobile communication system like a long term evolution (long term evolution, LTE) system, a worldwide interoperability for microwave access (worldwide interoperability for microwave access, WiMAX) communication system, a 5th generation (5th generation, 5G) mobile communication system like a new radio (new radio, NR) system, and a future communication system like a 6G mobile communication system.

With the acceleration of digital transformation in various industries such as healthcare, factories, ports, coal mines, and governments and enterprises, computing and communication are becoming core foundational capabilities for enabling digital and intelligent transformation of the industries. Therefore, carriers propose a concept of a computational power network and organize standardization discussions in 3GPP. A meaning of the computational power network is to sense ubiquitous computing and services through a network, and schedule compute tasks to appropriate compute nodes for processing, to improve utilization of network resources and computing resources, and provide services with low delay and high reliability for users, so as to ensure user experience.

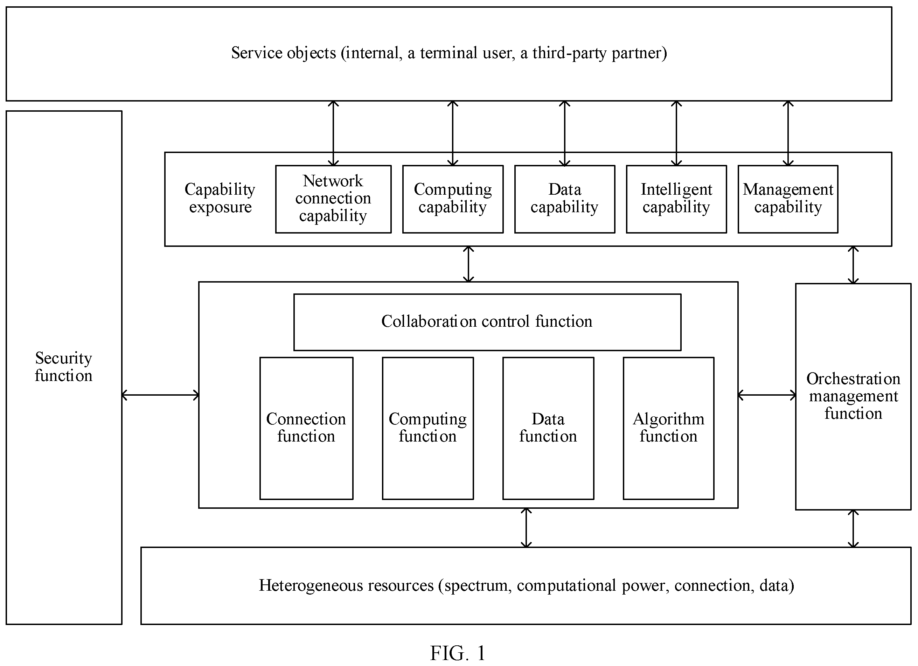

Targeting 6G networks and future service requirements such as low-delay requirements of immersive services such as extended reality (extended reality, XR) and holography as well as real-time processing requirements for massive data of intelligent services such as robots, intelligent twins, and AI-generated content (AI-generated content, AIGC) large models, the IMT-2030 (6G) promotion group believes that 6G services present immersive and intelligent features, and the 6G network needs to support scheduling of AI resources and processing of an ultra-large amount of data, to reduce a computation amount and energy consumption of a terminal device, so as to meet a requirement on a capability of a lighter, more immersive, and more intelligent terminal device. Therefore, an X as a service (X as a service, XaaS) system architecture shown in FIG. 1 is proposed. In the system architecture, a communication device has capability exposure, collaborative control, orchestration management, and security functions, so that a 6G network architecture changes from "connection-centric" to "task-centric".

A conventional "connection-centric" network architecture aims to provide connection channels required for data communication between terminal devices and between a terminal device and an application server, as well as corresponding lifecycle management mechanism (for example, creation, modification, deletion, and anchor migration of an end-to-end communication tunnel), and communication QoS assurance. For example, a connection establishment method in a 5G network, namely, a protocol data unit (protocol data unit, PDU) session establishment procedure, is to provide a transmission channel for data transmission between a terminal device and an application server (application server) in a data network (data network, DN), including establishing a data radio bearer (data radio bearer, DRB) between the terminal device and a radio access network (radio access network, RAN) and an NG interface user plane channel (NG-U Tunnel) between a RAN and a user plane function (user plane function, UPF) of a core network, and provide corresponding QoS assurance.

A "task-centric" network architecture not only requires a network to provide connection services, but also requires the network to perform collaboration and allocation of computational power, connections, algorithms, and data resources of network nodes to jointly achieve a specific goal. The 6G network provides computing services by introducing computational power, storage resources, and a mechanism for collaboration of computational power, algorithms, and data of a plurality of nodes.

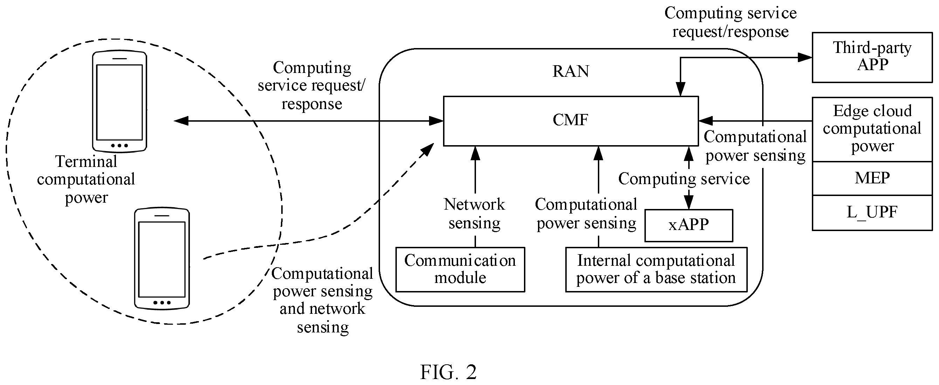

FIG. 2 shows an architecture of a computational power network that can be used to schedule a compute task. Leveraging a connection capability of a wireless network and widely available computational power in the network, the computational power network provides high-performance computational power, low-delay transmission, and intelligent service assurance services for diversified computing services. In the architecture shown in FIG. 2, a computing management function (computing management function, CMF) is deployed on a RAN side to perform functions such as computational power sensing, computing service sensing, network status sensing, and compute task scheduling. The CMF may schedule a service initiated by a network element, an external network, or a third-party application to compute nodes such as a terminal device, a mobile edge computing (mobile edge computing, MEC) platform, a cloud server, and a RAN device for execution.

However, in the current 5G network, the PDU session is established to provide the transmission channel for data transmission between the terminal device and the application server in the DN, and assurance of QoS of the session is for a service provided for the application server, and is not applicable to a data or computing service provided by a network element node in the network for the terminal device. Therefore, how the network element node (for example, an access network device) in the network provides the data or computing service for the terminal device becomes an urgent problem to be resolved.

In view of this, embodiments of this application provide a communication method, so that an access network device and/or a user plane network element can provide a data or computing service for a terminal device.

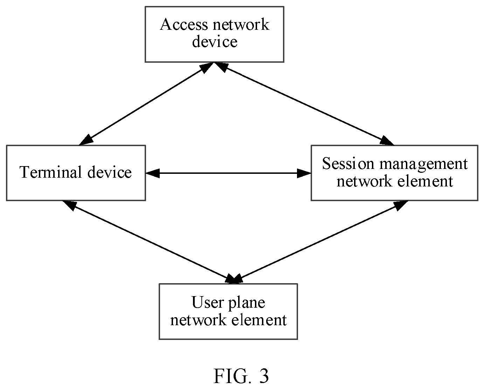

For example, FIG. 3 is a diagram of an architecture of a communication system according to an embodiment of this application. As shown in FIG. 3, the communication system includes a terminal device, an access network device, a user plane network element, and a session management network element. Every two of the terminal device, the access network device, the user plane network element, and the session management network element may communicate with each other.

### 1. Terminal device

There may be one or more terminal devices, for example, a first terminal device, a second terminal device, and a third terminal device. The terminal device may be a terminal device having a transceiver function, or may be a chip or a chip system disposed in the terminal device. The terminal device may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), an intelligent robot, a robot arm, workshop equipment, a wireless terminal in self driving, a wireless terminal in industrial control (industrial control), the wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, a flight device (for example, an intelligent robot, a hot air balloon, an uncrewed aerial vehicle, or an airplane), or the like. The terminal device in this application may alternatively be a vehicle-mounted module, a vehicle-mounted assembly, a vehicle-mounted part, a vehicle-mounted chip, or a vehicle-mounted unit that is built in a vehicle as one or more parts or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete component.

### 2. Access network device

In embodiments of this application, the access network device may locally provide a service for the terminal device. The service may also be referred to as a local service (local service), a local computing service, a local data service, or the like, for example, an AI inference service, an AI training service, an AI service, or a data service. The data service is a sensing data service or a positioning data service.

In embodiments of this application, the local service may be a service locally provided by a network internal node (for example, an access network device or a user plane network element) as a service provider for the terminal device, that is, a start point of service providing is the network internal node. For example, a service is provided by an application (application, APP) deployed on the network internal node. To be specific, for a service provided by a network node 1 for the terminal device through a network node 2, the service is a local service provided by the network node 1, and is not a local service provided by the network node 2.

There may be a plurality of access network devices, for example, a first access network device, a second access network device, and a third access network device. The access network device may also be referred to as an access network node, a RAN node, a RAN entity, an access node, or the like, is located on a network side of the foregoing communication system, to help the terminal device implement wireless access, and is a device having a wireless transceiver function, or may be disposed in a chip or a chip system of the device. The access network device includes but is not limited to: a base station (base station), an evolved NodeB (evolved NodeB, eNodeB), an access point (access point, AP), a transmission reception point (transmission reception point, TRP or transmission point, TP), a next generation NodeB (next generation NodeB, gNB), a next generation NodeB in a 6G mobile communication system, a base station in a future mobile communication system, an access node in a Wi-Fi system, or the like. The access network device may be a macro base station, a micro base station, or an indoor base station, a relay node or a donor node, an open radio access network (open radio access network, ORAN), or a radio controller in a centralized radio access network (centralized radio access network, CRAN) scenario. Alternatively, the access network device may be one antenna panel or a group of antenna panels (including a plurality of antenna panels) of a base station in 5G, or may be a network node that forms a gNB, a TRP, a TP, or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), or a road side unit (road side unit, RSU) having a base station function. Optionally, the access network device may alternatively be a server, a wearable device, a vehicle, a vehicle-mounted device, or the like. For example, an access network device in a V2X technology may be an RSU. All or some functions of the network device in this application may alternatively be implemented by using a software function running on hardware, or may be implemented by using a virtualized function instantiated on a platform (for example, a cloud platform). The access network device in this application may alternatively be a logical node, a logical module, or software that can implement all or some of the functions of the access network device.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified as a network device in an access network RAN, or the CU may be classified as a network device in a CN. This is not limited herein.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. In this application, any unit in the CU (or the CU-CP or the CU-UP), the DU, and the RU may be implemented by using a software module, a hardware module, or a combination of a software module and a hardware module.

In embodiments of this application, a form of the access network device is not limited. An apparatus configured to implement a function of the access network device may be an access network device, or may be an apparatus, for example, a chip system, that can support the access network device in implementing the function. The apparatus may be installed in the access network device or used in cooperation with the access network device.

### 3. User plane network element

In embodiments of this application, the user plane network element may also locally provide a service for the terminal device, and is configured to perform packet routing and forwarding, QoS processing on user plane data, and the like. The user plane network element may forward a user data packet according to a routing rule of a session management network element, for example, send uplink data to a data network or another user plane network element, and forward downlink data to another user plane network element or an access network device. The user plane network element may be a UPF in 5G communication.

### 4. Session management network element

The session management network element is configured to implement session management of a terminal device, and may trigger a user plane device to provide a local computing service for the terminal device to establish a data channel, and allocate and release a resource for a session of the terminal device. The resource includes a resource preset parameter QoS, a session path, a forwarding rule, and the like. The session management network element may be a session management function (session management function, SMF) network element in a 5G system.

In the communication system provided in embodiments of this application, a computing management function entity may be introduced to implement some or all operations related to a computing management function. The computing management function entity may also be referred to as a computing management function, a computing management function network element, a computing management function node, a computing management function device, a computing management function module, a computing management function model, a computing management function unit, or the like. For example, the computing management function entity may be built in a network element of a communication system. For example, the computing management function entity may be a computing management function module built in a terminal device, an access network device, a core network element, a cloud server, or an operation, administration and maintenance (operation, administration and maintenance, OAM) (which may be referred to as a network management system), to implement a function related to the computing management function. The OAM may be used as a network management system of the core network element and/or a network management system of the access network device. Alternatively, the computing management function entity may be an independently disposed network element in the communication system. Optionally, the terminal device or a chip built in the terminal device may also include the computing management function entity, configured to implement a function related to the computing management function. Optionally, the computing management function may be referred to as a CMF or another name. This is not limited in this application. The computing management function entity has one or more of the following functions: computational power sensing, computing service sensing, network status sensing, or compute task scheduling, and may orchestrate and manage computational power resources.

It should be understood that the communication system shown in FIG. 3 may further include another core network element, another terminal device, another access network device, or the like, for example, an access and mobility management network element, a data management network element, or a policy control network element. This is not limited herein. The access and mobility management network element may be an access and mobility management function (access and mobility management function, AMF) in the 5G system, the data management network element may be unified data management (unified data management, UDM) in the 5G system, and the policy control network element may be a policy control function (policy control function, PCF) in the 5G system.

In addition, an embodiment of this application further provides a protocol stack architecture applicable to completion of a computing service between a terminal device and an access network device. In this embodiment of this application, a computing service process mainly involves the following two types of information, signaling, or messages:
(1) Control type: control-type information such as computational power resource sensing, management, compute task requesting, orchestration, and allocation.
(2) Data type: data-type information such as compute task data (such as rendering data) and algorithms or models (such as an AI model).

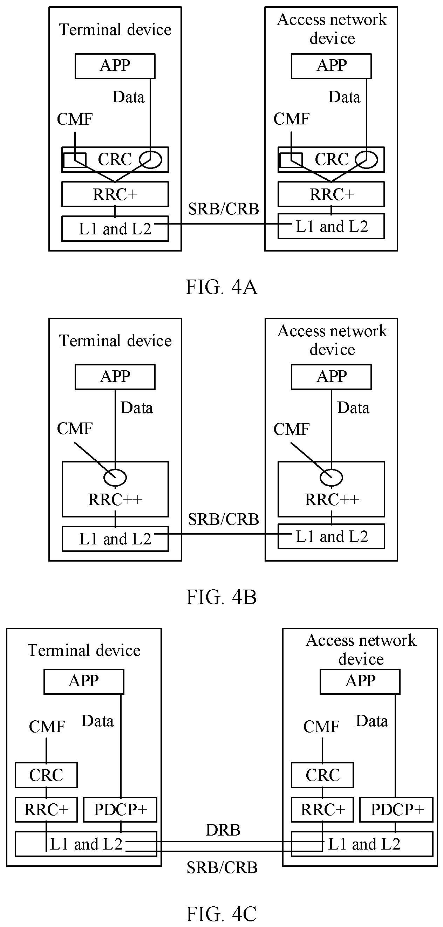

As shown in FIG. 4A to FIG. 4D, an APP is deployed in a terminal device and an access network device to provide a computing service. For the computing service, two types of protocol stack architectures are mainly provided. One type is a shared control plane protocol stack architecture, for example, architectures shown in FIG. 4A and FIG. 4B. To be specific, both control-type information and data-type information are transmitted through a control plane protocol stack. The other type is a user plane-control plane separated protocol stack architecture. To be specific, data-type information is transmitted through a user plane protocol stack, and control-type information is transmitted through a control plane protocol stack.

For the first type of protocol stack architecture, there are two architectures shown in FIG. 4A and FIG. 4B based on a deployment manner of a CMF. As shown in FIG. 4A, the CMF is separately deployed on the terminal device and the access network device, which may be understood as that the terminal device and the access network device each include a CMF module. A computing resource control (computing resource control, CRC) layer is introduced into control plane protocol stacks of the terminal device and the access network device based on existing control plane protocol stack architectures. For a transmit end, CMF-related control information and data information provided by the APP may be sent after being sequentially encapsulated at the CRC layer, an RRC layer, a layer (layer, L) 2, and an L1. For a receive end, received data is sequentially decapsulated at the L1, the L2, the RRC layer, and the CRC layer, to obtain the CMF-related control-type information and data provided by the APP. The data provided by the APP may be carried, for sending, in a container (container)-type information element (information element, IE) included in the CRC message.

As shown in FIG. 4B, the CMF is embedded into an RRC layer, to enhance the RRC layer, so that CMF-related control-type information may be generated. A new IE may be introduced into an RRC message to carry the CMF-related control information and data provided by an APP.

Based on the shared control plane protocol stack architectures shown in FIG. 4A and FIG. 4B, the CMF-related control-type information and the data provided by the APP can be mapped to a specific signaling radio bearer (signaling radio bearer, SRB), and addressing to the APP of the access network device and the APP of the terminal device, namely, APP discovery, can be implemented by using a control plane protocol message of the access network device. This control plane transmission manner may reuse a same mechanism as transmission of current RAN AI (the RAN AI, which may be considered as a RAN local APP, refers to using AI to optimize a communication service of a RAN, for example, cell handover, cell traffic prediction, and user mobility prediction), that is, control plane signaling is used to transmit APP data and control signaling.

The CMF-related control-type information and the data provided by the APP may be mapped to the specific SRB according to the following rules:
(1) A common (common) SRB carries all CMF-related control-type information, such as compute task requesting and scheduling and computational power resource sensing and management.
(2) Specific different SRBs (for example, an SRB1 to an SRBN) carry messages of APP data having different QoS requirements, for example, input and output data of a computing (sub)task, algorithm and model data related to an APP program, and computation result return data.

The common SRB and the specific SRB may reuse an existing SRB resource, or may define a new computing radio bearer (computing radio bearer, CRB) based on existing DRB and SRB resources. This is not limited herein.

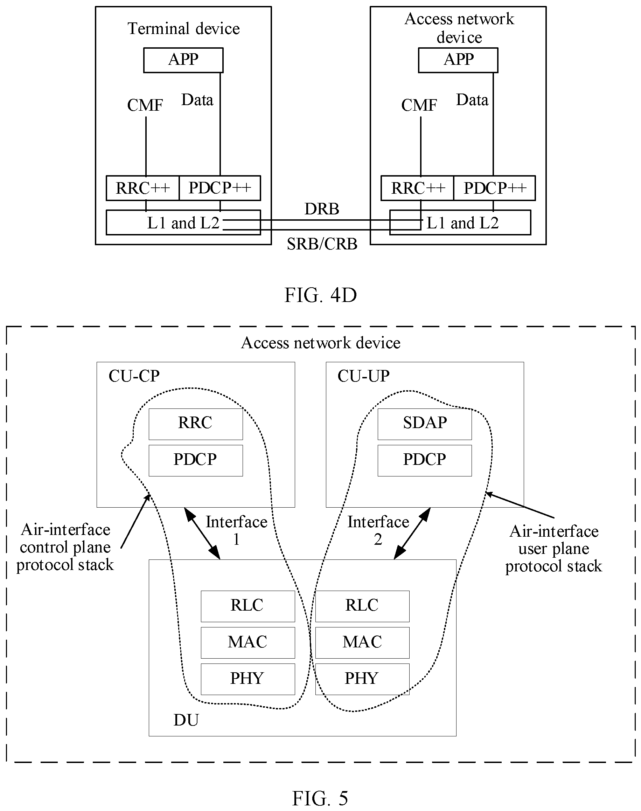

For the second type of protocol stack architecture, similar to the first type of architecture, there are two architectures shown in FIG. 4C and FIG. 4D based on a deployment manner of a CMF. As shown in FIG. 4C, the CMF is separately deployed on the terminal device and the access network device, or the CMF is separately deployed on the terminal device and the access network device as a downward deployed core network function. A CRC layer is introduced based on an existing control plane protocol stack architecture, to carry CMF-related control information. Data provided by an APP is transmitted through an existing user plane protocol stack.

As shown in FIG. 4D, the CMF is embedded into an RRC layer, to enhance the RRC layer. An RRC message carries CMF-related control information, and data provided by an APP is transmitted through an existing user plane protocol stack.

Based on the user plane-control plane separated protocol stack architectures shown in FIG. 4C and FIG. 4D, the data provided by the APP is transmitted through the existing user plane protocol stack, and the CMF-related control information is transmitted through the control plane protocol stack. In this architecture, a core network function like a local UPF (local UPF) is locally deployed on the access network device, and computing service data is transmitted through the local UPF. An existing 5G NR protocol procedure may be reused, to introduce a corresponding procedure like session management for a computing service. For mapping of the data provided by the APP to the DRB, refer to an existing implementation. For mapping of the CMF-related control-type information to the SRB, refer to the mapping rule of the foregoing type of protocol stack architecture.

In the protocol layer architecture shown in FIG. 4A to FIG. 4D, protocol layers specifically related to the L1 and the L2 are not drawn. It should be understood that, from bottom to top, a protocol layer included in the L1 is a PHY layer, protocol layers included in the L2 are a MAC layer, an RLC layer, and a PDCP layer, and an RRC layer belongs to an L3. In addition, the newly added CRC layer may be classified into the L3 or a higher layer. This is not limited herein.

It should be noted that, in the protocol layer architecture shown in FIG. 4A to FIG. 4D, the CRC layer is deployed above the RRC layer. Alternatively, the CRC layer may be deployed below the RRC layer. This is not limited herein. As a computing resource control entity, the CRC may be deployed as a protocol layer, or may be deployed as a functional module. This is not limited herein.

For the foregoing communication system, for example, FIG. 5 is a diagram of a structure of an access network device based on a CU-DU separated architecture according to an embodiment of this application. As shown in FIG. 5, based on protocol stack division, the access network device includes a CU-CP, a CU-UP, and a DU. The CU-CP may communicate with the DU through an interface 1, and the CU-UP may communicate with the DU through an interface 2. Optionally, the access network device may be a gNB. In this case, the interface 1 may be an F1-C interface, and the interface 2 may be an F1-U interface.

The CU-CP includes an RRC layer and a packet data convergence protocol (packet data convergence protocol, PDCP) layer. The CU-UP includes a service data adaptation protocol (service data adaptation protocol, SDAP) layer and a PDCP layer. The DU includes a radio link control (radio link control, RLC) layer, a MAC layer, and a PHY layer. It can be learned that the CU-CP and the CU-UP each include a PDCP layer, the RRC layer is located above the PDCP layer in the CU-CP, and an RRC message is encapsulated into a PDCP data (data) packet data unit (packet data unit, PDU) after being processed by the PDCP layer. The PDCP data PDU may be separately sent by the CU-CP and the CU-UP.

In the protocol stack architecture of the access network device shown in FIG. 4A or FIG. 4C, the CRC layer is added. During CU-DU division, the CRC layer may be located in a CU.

A PDCP control (control) PDU is generated by the PDCP layer, is used to transfer robust header compression (robust header compression, ROHC) context information and the like, and is usually sent by the PDCP layer of the CU-UP.

In embodiments of this application, a computing management function may be integrated into a CU or a DU, or may be integrated into a CU-CP or a CU-UP that is further separated from the CU.

In a scenario of the access network device based on the CU-DU separated architecture, in a possible implementation, generation of control information such as indication information, configuration information, and scheduling information, data processing, and the like in embodiments of this application may be performed by the CU, and a CMF may be deployed on the CU. During uplink transmission, after the DU receives indication information and/or data from a terminal device, the CU needs to send the indication information and/or the data to the DU for processing. During downlink transmission, the CU sends the generated control information or data to the DU, and then the DU sends the generated control information or data to the terminal device. In this case, the control information/data may be carried in DCI or a MAC CE for sending.

In a possible implementation, generation of control information such as indication information, configuration information, and scheduling information, data processing, and the like in embodiments of this application may be performed by the DU, and a CMF may be deployed on the DU. After determining the control information or the data, the DU may submit the control information or the data to the CU, and the CU sends the control information or the data to the terminal device through an RRC message or a PDCP control PDU.

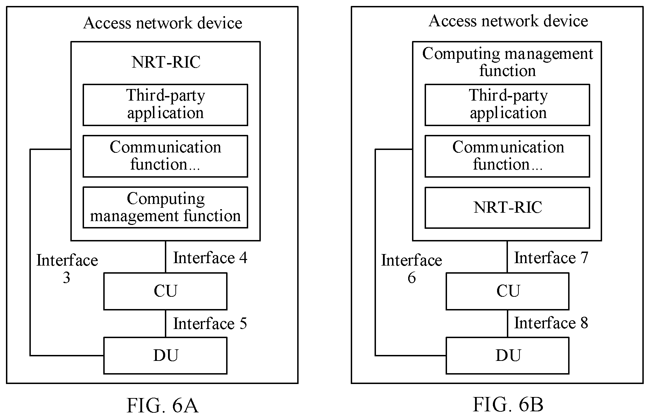

For another example, FIG. 6A and FIG. 6B are diagrams of a structure of an access network device based on an O-RAN architecture according to an embodiment of this application. As shown in FIG. 6A and FIG. 6B, the access network device includes an intelligent controller (RAN intelligent controller, RIC). For example, the RIC may be an AI module, which is configured to implement an AI-related function. The RIC may include near real-time RIC (near real-time RIC, NRT-RIC) and non-real-time RIC (non-real-time RIC, Non-RT RIC).

The NRT-RIC is used for model training and inference, for example, is configured to: train an AI model and perform inference by using the AI model. The NRT-RIC may obtain information on a network side and/or a terminal device side from the access network device (for example, a CU, a CU-CP, a CU-UP, a DU, and/or an RU) and/or a terminal device. The information may be used as training data or inference data. Optionally, the NRT-RIC may submit an inference result to the access network device and/or the terminal device. Optionally, the inference result may be exchanged between the CU and the DU and/or between the DU and the RU. For example, the NRT-RIC submits the inference result to the DU, and the DU sends the inference result to the RU.

The non-RT RIC is used for model training and inference, for example, is configured to: train an AI model and perform inference by using the AI model. The non-RT RIC may obtain information on a network side and/or a terminal device side from the access network device (for example, a CU, a CU-CP, a CU-UP, a DU, and/or an RU) and/or a terminal device. The information may be used as training data or inference data, and an inference result may be submitted to the access network device and/or the terminal device. Optionally, the inference result may be exchanged between the CU and the DU and/or between the DU and the RU. For example, the non-RT RIC submits the inference result to the DU, and the DU sends the inference result to the RU.

Alternatively, the NRT-RIC and the non-RT RIC each may be independently disposed as one network element. Optionally, the NRT-RIC or the non-RT RIC may alternatively be used as a part of another device. For example, the NRT-RIC is disposed in the access network device (for example, the CU or the DU), and the non-RT RIC is disposed in an OAM, a cloud server, a core network element, or another network device.

As shown in FIG. 6A, the access network device includes an NRT-RIC, a CU, and a DU. The NRT-RIC is integrated with a computing management function entity and runs a third-party application. The NRT-RIC communicates with the DU through an interface 3, the NRT-RIC communicates with the CU through an interface 4, and the CU communicates with the DU through an interface 5. Optionally, the access network device may be a gNB, the interface 3 and the interface 4 may be E2 interfaces, and the interface 5 may be an F1 interface.

In this architecture, generation of control information such as indication information, configuration information, and scheduling information, data processing, and the like in embodiments of this application are performed by the NRT-RIC. During downlink transmission, the NRT-RIC may send the control information or data to the DU through the interface 2, and then the DU sends the control information or the data to the terminal device. In this case, the control information or the data may be carried in DCI or a MAC CE for sending. Alternatively, the NRT-RIC may send the control information or the data to the CU through the interface 4, then the CU sends the control information or the data to the DU through the interface 5, and then the DU sends the control information or the data to the terminal device. In this case, the control information or the data may be carried in an RRC message or a PDCP control PDU for sending. Similarly, during uplink transmission, after receiving indication information or data from the terminal device, the DU may send the indication information or the data to the NRT-RIC through the CU, or may directly send the indication information or the data to the NRT-RIC.

As shown in FIG. 6B, the access network device includes a computing management function entity (which may also be referred to as a computing management function module in this case), a CU, and a DU. The computing management function entity is integrated with the NRT-RIC, and runs a third-party application. The computing management function entity communicates with the DU through an interface 6, the computing management function entity communicates with the CU through an interface 7, and the CU communicates with the DU through an interface 8. Optionally, the access network device may be a gNB, the interface 6 and the interface 7 may be E2 interfaces, and the interface 8 may be an F1 interface.

In this architecture, generation of control information such as indication information, configuration information, and scheduling information, data processing, and the like in embodiments of this application are performed by a computing management function. During downlink transmission, the computing management function may send the control information or data to the DU through the interface 2, and then the DU sends the control information or the data to the terminal device. In this case, the control information or the data may be carried in DCI or a MAC CE for sending. Alternatively, the computing management function may send the control information or the data to the CU through the interface 4, then the CU sends the control information or the data to the DU through the interface 5, and then the DU sends the control information or the data to the terminal device. In this case, the control information or the data may be carried in an RRC message or a PDCP control PDU for sending. Similarly, during uplink transmission, after receiving indication information or data from the terminal device, the DU may send the indication information or the data to the computing management function through the CU, or may directly send the indication information or the data to the computing management function.

In a possible implementation, the NRT-RIC in FIG. 6A and FIG. 6B may alternatively be replaced with a non-NRT RIC, and the non-NRT RIC may integrate a computing management function entity and a third-party application, or the computing management function entity may integrate a non-NRT RIC function and a third-party application. This is not limited herein.

In embodiments of this application, provision of the local service is combined with an architecture of an existing O-RAN, so that the architecture and an interface of the O-RAN are slightly changed. In addition, the third-party application is run in an open RIC module, which does not cause a security concern, so that the access network device can locally provide a service.

It should be understood that, in embodiments of this application, names of nodes, modules, devices, or network elements in different scenarios, architectures, or systems, and names of communication interfaces between any two of the node, the module, the device, or the network element are provided as examples, and a possibility of a name change in a future communication system, scenario, or architecture is not excluded.

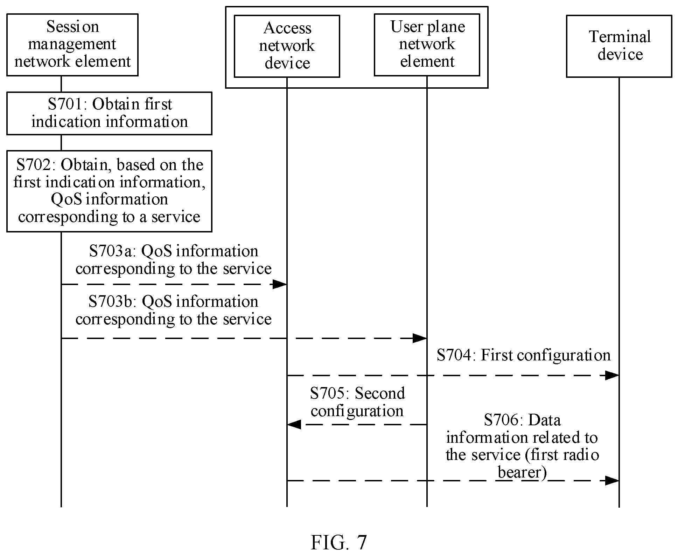

With reference to FIG. 7 to FIG. 10, the following specifically describes the communication methods provided in embodiments of this application. The communication method may be applied to communication between the terminal device, the access network device, the user plane device, and the session management network element shown in FIG. 3. Alternatively, an action of the session management network element in the method may be performed by an apparatus/module in the session management network element, for example, a chip, a processor, or a processing unit in the session management network element. This is not specifically limited in embodiments of this application. Alternatively, an action of the access network device in the method may be performed by an apparatus/module in the access network device, for example, a chip, a processor, or a processing unit in the access network device. This is not specifically limited in embodiments of this application. Alternatively, an action of the user plane network element in the method may be performed by an apparatus/module in the user plane network element, for example, a chip, a processor, or a processing unit in the user plane network element. This is not specifically limited in embodiments of this application. Alternatively, an action of the terminal device in the method may be performed by an apparatus/module in the terminal device, for example, a chip, a processor, or a processing unit in the terminal device. This is not specifically limited in embodiments of this application.

For example, FIG. 7 is a schematic flowchart of a communication method according to an embodiment of this application. As shown in FIG. 7, the communication method includes the following steps.

S701: A session management network element obtains first indication information.

The first indication information indicates a service provided by an access network device and/or a user plane network element for a terminal device, and the first indication information may include information such as a service provider, a service type (type), or a service identifier (identifier, ID). The session management network element may be an SMF in a 5G system, the access network device may be a gNB in the 5G system, and the user plane network element may be a UPF in the 5G system. In this embodiment of this application, the service provided by the access network device and/or the user plane network element for the terminal device may also be referred to as a local service (local service), that is, a service provider or source is the access network device and/or the user plane network element. The access network device and/or the user plane network element may also be referred to as a user plane device of the terminal device.

It should be understood that the access network device may independently provide a service for the terminal device, or the user plane network element may independently provide a service for the terminal device, or the access network device and the user plane network element each may provide a service for the terminal device, where provided services may be the same or may be different. This is not limited herein.

In this embodiment of this application, there may be two types of services. One type is a computing service, and the service may include: executing, by the access network device and/or the user plane network element, a compute task requested by the terminal device, and sending a result of the compute task to the terminal device, where the compute task may be an AI inference task, an AI training task, an AR rendering task, or the like. The other type is a data service, and the service may include: obtaining, by the access network device and/or the user plane network element, data or an AI model requested by the terminal device, and sending the data or the AI model to the terminal device, where the data may be sensing data, positioning data, or measurement data, or the like. It should be understood that in addition to the foregoing two types of services, this embodiment of this application may further include another type of service. This is not limited herein.

In a possible design solution, the terminal device sends the first indication information to the session management network element. Correspondingly, the session management network element receives the first indication information from the terminal device. In this design solution, in a possible implementation, the terminal device sends a session establishment request message to the session management network element. Correspondingly, the session management network element receives the session establishment request message from the terminal device. The session establishment request message carries the first indication information. The session establishment request message includes the first indication information, and the session establishment request message is used by the terminal device to request to establish a session for the service. In other words, the terminal device may request, through the session establishment request message, the access network device and/or the user plane network element to provide the service.

In this case, the first indication information may be implicitly indicated by a special value of any one of information elements such as a PDU session identifier (PDU Session ID), a terminal device identifier (UE ID), an internet protocol (internet protocol, IP) or MAC address (UE IP/MAC address) of the terminal device, a terminal device requested data network name (data network name, DNN) (UE Requested DNN) identifier, a single network slice selection assistance information (single network slice selection assistance information, S-NSSAI) identifier, and a request type (Request Type) in the session establishment request message, or a combination of a plurality of values of the information elements. For example, a new value is set for the S-NSSAI identifier, the UE requested DNN identifier, the PDU session ID, the request type, or the like, to indicate the service provided by the access network device and/or the user plane network element for the terminal device. For another example, a new service type field, for example, a "local PDU session" or "computing PDU session" field, may be added to a reserve field (Reserve Field) of the request type, to indicate the service provided by the access network device and/or the user plane network element for the terminal device. For another example, a new value is set for a requested PDU session type carried in an N1 SM container in the session establishment request message, or a new field is added, to indicate the service provided by the access network device and/or the user plane network element for the terminal device.

It should be understood that the first indication information or the session establishment request message may be sent by the terminal device to the session management network element through the access network device and a mobility and access management network element. The mobility and access management network element may be an AMF in the 5G system. In addition, the terminal device may alternatively send the first indication information through another defined or newly defined message, for example, a computing service request message or a data service request message. This is not limited herein.

In another possible design solution, an operation management network element sends the first indication information to the session management network element. Correspondingly, the session management network element receives the first indication information from the operation management network element. The operation management network element may be an OAM in the 5G system, and is used as a network management system to trigger execution of the service.

S702: The session management network element obtains, based on the first indication information, QoS information corresponding to the service.

In this embodiment of this application, after receiving the first indication information, the session management network element may negotiate with a data management network element to obtain user subscription session information, and initiate, to a policy control network element, a request for obtaining session policy information of the terminal device, to obtain the session policy information of the terminal device. The session policy information includes the QoS information corresponding to the service. The data management network element may be a UDM in the 5G system, and the policy control network element may be a PCF in the 5G system. The QoS information corresponding to the service may include computational power requirement information for executing the service and/or data transmission requirement information for executing the service. The QoS information may be QoS for a service, or may be QoS for a type of services. This is not limited herein.

The computational power requirement information (which may also be referred to as computational power QoS information) for executing the service may include at least one of the following: a type of a compute task, an input data rate, an output data rate, a computing delay requirement, a computation load (computation load) requirement, a computing precision requirement, a computing energy consumption requirement, or the like.

The type of the compute task may be a computational power type of physical hardware required for executing the compute task corresponding to the service, for example, a computational power type like a central processing unit (central processing unit, CPU), a graphics processing unit (graphics processing unit, GPU), a neural network processing unit (neural network processing unit, NPU), or a tensor processing unit (tensor processing unit, TPU). Alternatively, the type of the compute task may be a service type corresponding to the compute task, for example, an image/a video recognition type, a compression type, a graphics rendering type, an AI training type, an AI inference type, a sensing processing type, a high-performance computing type, or a big data offline analysis type.

A requirement (or need) of the input/output data rate may indicate (or present or represent) an input/output data volume requirement, to represent a communication QoS requirement of a compute task. The requirement of the compute task includes a communication QoS requirement of the compute task. The communication QoS requirement of the compute task may further include a communication QoS parameter defined in 5G NR, for example, a 5G QoS parameter like an uplink/downlink packet delay budget (uplink/downlink packet delay budget, UL/DL PDB), a guaranteed bit rate (guaranteed bit rate, GBR), or a maximum data burst volume (maximum data burst volume, MDBV), and may be represented by a 5G QoS identifier (5G QoS identifier, 5QI).

The computation load requirement may indicate (or present or represent) a requirement on a computing capability for executing a compute task, and may be represented as a requirement on a computing capability of a processor. The computing capability of the processor may include a quantity of operations that can be performed by the processor per second (second, s) (operations per second, OPS) or a quantity of floating-point operations that are performed by the processor per second (floating-point operations per second, FLOPS), a model of the processor, a memory capacity, an I/O speed, a dominant frequency, or the like. For example, the computation load requirement includes a hertz (hertz, Hz) or gigahertz (gigahertz, GHz) value that the dominant frequency needs to reach, a quantity of gigabits per second (Gbits/s) that a quantity of input/output operations per second (input/output operations per second, IOPS) needs to reach, and a quantity of bytes of a required memory capacity.

The computing delay requirement may indicate (or present or represent) a requirement on duration for completing a compute task, for example, a time period in which the compute task needs to be completed.

The computing energy consumption requirement may also indicate (or present or represent) a requirement on computational power consumption, and may be a requirement on power or energy consumed by a device that executes a compute task. For example, the compute task may be executed by the terminal device, the computational power consumption requirement may include a computational power consumption requirement on the terminal device, the computational power consumption requirement on the terminal device may be a requirement on average computational power consumption of the terminal device for executing a task in a period of time, and duration for computing the average computational power consumption may be predefined or preconfigured. Alternatively, the computational power consumption requirement may be a requirement on computational power consumption of the terminal device in completing processing once or in a short time (for example, processing one video frame or one task). The computational power consumption may alternatively be converted into a corresponding computing energy consumption indicator whose unit may be a convertible unit like watts or joules.

The computing precision requirement may indicate (or present or represent) a requirement on an error between a computation result and a real result. For example, the error does not exceed 5%. Alternatively, the computing precision requirement may be an accuracy requirement on an inference/training result obtained through inference or training by using an AI model/algorithm.

The data transmission requirement information (which may also be referred to as data transmission QoS information) for executing the service may include at least one of the following: a data transmission delay requirement, a data transmission reliability requirement, priority information, or the like. The data transmission delay requirement may be a requirement on a delay for the access network device to complete service-related data transmission with the terminal device, or may be a requirement on a delay for the terminal device to receive data related to the service provided by the access network device and/or the user plane network element. The data transmission reliability requirement may be a reliability requirement for transmitting the service-related data, for example, a requirement on a bit error rate, jitter, or a packet loss rate of transmission. The priority information indicates an execution priority of the service, and when there are a plurality of services, the priority information is used by the access network device and/or the user plane network element to determine an execution sequence of the plurality of services.

In a possible design solution, the session management network element may alternatively deliver, to the access network device and/or the user plane network element based on the QoS information, a configuration that meets a QoS requirement included in the QoS information. It should be understood that, in this embodiment of this application, when the user plane network element provides the service for the terminal device, the QoS information corresponding to the service includes QoS information between the access network device and the terminal device, QoS information between the access network device and the user plane network element, and QoS information between the user plane network element and the access network device, and may further include configuration information related to an NG-tunnel, such as a route priority and congestion avoidance.

Therefore, after obtaining the QoS information corresponding to the service, the session management network element sends the QoS information corresponding to the service to the service provider, that is, the access network device and/or the user plane network element, so that the access network device and/or the user plane network element establish/establishes a service-related data channel based on the QoS information corresponding to the service.

In a possible scenario, only the access network device provides the service for the terminal device. In this case, the method provided in this embodiment of this application further includes the following S703a.

S703a: The session management network element sends the QoS information corresponding to the service to the access network device. Correspondingly, the access network device receives the QoS information corresponding to the service from the session management network element.

In this scenario, the session management network element may send the QoS information corresponding to the service to the access network device through a session resource setup request.

In another possible scenario, only the user plane network element provides the service for the terminal device. In this case, the method provided in this embodiment of this application further includes the following S703b.

S703b: The session management network element sends the QoS information corresponding to the service to the user plane network element. Correspondingly, the user plane network element receives the QoS information corresponding to the service from the session management network element.

In this scenario, the session management network element may send the QoS information corresponding to the service to the user plane network element through a tunnel setup request. In this scenario, because the data related to the service provided by the user plane network element needs to be forwarded by the access network device to the terminal device, the session management network element may alternatively send the QoS information corresponding to the service to the access network device, or send only the QoS information used between the access network device and the terminal device, or the user plane network element sends the corresponding QoS information to the access network device. This is not limited herein.

In another possible scenario, both the access network device and the user plane network element provide services for the terminal device. In this case, the method provided in this embodiment of this application further includes S703a and S703b.

In this scenario, the service provided by the access network device may be the same as or different from the service provided by the user plane network element. In other words, in this case, the session management network element separately obtains QoS information corresponding to the service provided by the access network device and QoS information corresponding to the service provided by the user plane network element, and separately sends the QoS information to the access network device and the user plane network element.

S704: The access network device sends a first configuration to the terminal device. Correspondingly, the terminal device receives the first configuration from the access network device.

The first configuration is used to configure the terminal device to establish a first radio bearer that is between the terminal device and the access network device and that is used for the service. The first radio bearer used for the service may include a radio bearer used for the service provided by the user plane network element and/or a radio bearer used for the service provided by the access network device.

In the scenario in which only the access network device provides the service for the terminal device, for example, in S703a, the first radio bearer is used to transmit data related to the service provided by the access network device. In a possible implementation, after receiving the QoS information, the access network device may sense a local computational power status based on a computing management function, and determine whether the local computational power status meets a computational power QoS requirement in the QoS information. When the computational power QoS requirement is met, it is determined that the requested service can be executed, and a related configuration of the first radio bearer used to bear the service-related data, namely, the first configuration, is determined based on the data transmission requirement in the QoS information. For example, mapping between a data transmission QoS requirement and a resource configuration of a radio bearer is completed. Different radio bearers are used to transmit data with different data transmission QoS requirements. The access network device locally configures a mapping relationship between data transmission QoS requirement information and a radio bearer configuration parameter.

In another possible implementation, after receiving the QoS information, the access network device may sense a local computational power status based on a computing management function, and determine whether the local computational power status meets a computational power QoS requirement in the QoS information. When the computational power QoS requirement is met, it is determined that the requested service can be executed, and a related configuration of the first radio bearer used to bear the service-related data, namely, the first configuration, is further determined based on the computational power QoS requirement. For example, mapping between the computational power QoS requirement and a configuration of a radio bearer is completed. Different radio bearers are used to transmit data with different computational power QoS requirements. The access network device locally configures a mapping relationship between computational power QoS requirement information and a radio bearer configuration parameter, for example, a mapping relationship between a computing delay, a computation load, or computing precision and a radio bearer configuration parameter.

In another possible implementation, after receiving the QoS information, the access network device may sense a local computational power status based on a computing management function, and determine whether the local computational power status meets a computational power QoS requirement in the QoS information. When the computational power QoS requirement is met, it is determined that the requested service can be executed, and a related configuration of the first radio bearer used to bear the service-related data, namely, the first configuration, is determined based on the computational power QoS requirement and a data transmission QoS requirement in the QoS information. For example, mapping between QoS information and a configuration of a radio bearer is completed. Different radio bearers are used to transmit data with different QoS requirements. The access network device locally configures a mapping relationship between QoS information and a radio bearer configuration parameter.

The first radio bearer may include at least one of a data radio bearer (DRB), a signaling radio bearer (SRB), or a computing radio bearer (CRB). The DRB is used to transmit data information related to a service, and the SRB is used to transmit control information related to a service. In the protocol stack architectures shown in FIG. 4A and FIG. 4B, both the SRB and the CRB may be used to transmit control information and/or data information related to the service. In other words, the access network device may establish a DRB to transmit the service-related data, and establish an SRB and/or a CRB to transmit the control information related to the service. Alternatively, the access network device may not establish a DRB to transmit the data information related to the service, but establish an SRB and/or a CRB to transmit both the data information and the control information. It should be understood that the first radio bearer is mainly used to transmit the data information related to the service, but transmission of other control information in a data transmission process is not excluded.

For example, the QoS information corresponding to the service includes the computing precision requirement on the access network device and the data transmission delay requirement. The access network device determines whether the computing precision of the access network device meets the requirement. If the computing precision meets the requirement, a radio bearer is further established based on the data transmission delay requirement, and a resource is allocated to the bearer for transmission. If a data transmission delay is required to be short, a large quantity of resources are allocated to the established radio bearer for data transmission. If a data transmission delay is required to be long, a small quantity of resources are allocated to the established radio bearer for data transmission.

For another example, the QoS information corresponding to the service includes the computing precision requirement on the access network device. The access network device determines whether the computing precision of the access network device meets the requirement. If the computing precision meets the requirement, a radio bearer is further established based on the computing precision requirement, and a resource is allocated to the bearer for transmission. If the computing precision requirement is high (implicitly indicating a high data importance degree or a large computing delay), a large quantity of resources are allocated to the established radio bearer for data transmission. If the computing precision requirement is low (implicitly indicating a low data importance degree or a small computing delay), a small quantity of resources are allocated to the established radio bearer for data transmission. In this example, the computing precision requirement may alternatively be replaced with the computation load requirement.

For another example, the QoS information corresponding to the service includes the computing delay requirement on the access network device. The access network device determines whether the computing delay of the access network device meets the requirement. If the computing delay meets the requirement, a radio bearer is further established based on the computing delay requirement, and a resource is allocated to the bearer for transmission. If the computing delay is required to be short (implicitly indicating that a data transmission delay is required to be long), a small quantity of resources are allocated to the established radio bearer for data transmission. If the computing delay is required to be long (implicitly indicating that a data transmission delay is required to be short), a large quantity of resources are allocated to the established radio bearer for data transmission.

For another example, the QoS information corresponding to the service includes the computation load requirement on the access network device and the data transmission delay requirement. The access network device determines whether a computation load capability of the access network device meets the requirement. If the computation load capability meets the requirement, a radio bearer is further established based on the computation load requirement and the data transmission delay requirement, and a resource is allocated to the bearer for transmission. If the computation load is required to be large and a data transmission delay is required to be short, a large quantity of resources are allocated to the established radio bearer for data transmission. If the computation load is required to be small and a data transmission delay is required to be long, a small quantity of resources are allocated to the established radio bearer for data transmission.

In the scenario in which only the user plane network element provides the service for the terminal device, for example, S703b, the first radio bearer is used to transmit data related to the service provided by the user plane network element. In this case, the access network device may establish a radio bearer based on QoS of the service provided by the user plane network element for the terminal device. A difference from the scenario shown in S703a lies in that the access network device is configured to determine the QoS information configured for the radio bearer to ensure the service provided by the user plane network element.

In the scenario in which both the user plane network element and the access network device provide the services for the terminal device, for example, S703a and S703b are included, the first radio bearer includes the radio bearer used for the service provided by the user plane network element and the radio bearer used for the service provided by the access network device. In this case, the access network device obtains QoS information for ensuring the service provided by the access network device and QoS information for ensuring the service provided by the user plane network element. The access network device may separately establish different radio bearers based on QoS information of different services, to separately transmit data related to the service locally provided by the user plane network element for the terminal device and data related to the service locally provided by the access network device for the terminal device.

In a possible design solution, the first configuration may be carried in an RRC message, for example, an RRC setup message or an RRC reconfiguration message. In a scenario in which the first radio bearer is a DRB, the first configuration may be carried in a DRB addition/modification list (drb-ToAddModList) information element in the RRC reconfiguration message for sending.

In a possible design solution, the access network device may send second indication information to the session management network element. Correspondingly, the session management network element receives the second indication information from the access network device. The second indication information indicates that the first radio bearer that is between the access network device and the terminal device and that is used for the service is successfully established, and the second indication information may be carried in a PDU session resource setup response message. In this solution, in a possible case, the second indication information may alternatively indicate that the first radio bearer that is between the access network device and the terminal device and that is used for the service fails to be established. For example, a resource is limited or insufficient.

It should be understood that, before the first radio bearer is established, a radio bearer used for communication is also established between the terminal device and the access network device. For example, the first configuration is transmitted via a second radio bearer. The second radio bearer is different from the first radio bearer, and may be established before the first radio bearer, to implement transmission of control information such as indication information and configuration information between the terminal device and the access network device. The second radio bearer may be at least one of a signaling radio bearer or a computing radio bearer.

In a possible design solution, the second radio bearer may be a common (common) signaling radio bearer or a common computing radio bearer. The common signaling radio bearer or the common computing radio bearer is used to transmit all control information related to the service, for example, the first indication information sent by the terminal device and the first configuration sent by the access network device. For example, the first configuration is carried in the RRC setup (Setup) message (Msg4) for sending. In this case, the common signaling radio bearer may be an SRB0 in NR. For another example, the first configuration is carried in the RRC reconfiguration (Reconfiguration) message for sending. In this case, the common signaling radio bearer may be an SRB1 in NR.

In a possible case, when the computational power status of the access network device does not meet the computational power QoS requirement, the access network device may sense a computational power status of another access network device or a user plane network element, and assign a service to an access network device or a user plane network element that meets the computational power QoS requirement, or negotiate with the access network device or the user plane network element that meets the QoS requirement, so that the access network device or the user plane network element provides the service for the terminal device.

For example, if an access network device #1 determines that a computational power status of the access network device #1 does not meet the computational power QoS requirement, and senses that a computational power status of an access network device #2 meets the computational power QoS requirement, the access network device #1 may send, to the access network device #2, the QoS information corresponding to the service and indication information #1, where the indication information #1 indicates the access network device #2 to provide the service for the terminal device. Optionally, the indication information #1 may include a reason why the access network device #1 cannot execute the service. The indication information #1 and indication information #2 may be carried in an Xn-C message for sending.

Further, the access network device #1 may send the indication information #2 to the terminal device, to notify the terminal device that the access network device #2 provides the service for the terminal device, and/or the access network device #1 may send indication information #3 to the session management network element, to notify the session management network element that the access network device #2 provides the service for the terminal device. The indication information #2 and/or the indication information #3 may also include the reason why the access network device #1 cannot execute the service.

It should be understood that regardless of whether the user plane network element provides the service for the terminal device or the access network device provides the service for the terminal device, the access network device needs to determine the first configuration based on the QoS information, and send the first configuration to the terminal device.

S705: The user plane network element sends a second configuration to the access network device. Correspondingly, the access network device receives the second configuration from the session management network element.

In the scenario in which both the user plane network element and the access network device provide the services for the terminal device, or in the scenario in which only the user plane network element provides the service for the terminal device, that is, when the user plane network element provides the service for the terminal device, when the user plane network element provides the service for the terminal device, the user plane network element needs to establish a tunnel that is used for the service with the access network device, for example, general packet radio service (general packet radio service, GPRS) tunneling protocol for the user plane (GPRS tunneling protocol for the user plane, GTP-U) tunnel. Therefore, the user plane network element may determine the second configuration based on the QoS information corresponding to the service, and send the second configuration to the access network device. The second configuration is used to configure the tunnel that is established between the access network device and the user plane network element and that is used for the service. The second configuration may include related configuration information such as a route priority, congestion avoidance, packet filtering, and uplink or downlink rate control.

It should be understood that S705 may be considered as an optional step, and when the user plane network element provides no service for the terminal device, S705 is not performed.

S706: The access network device sends, via the first radio bearer, the data information related to the service to the terminal device. Correspondingly, the terminal device receives, via the first radio bearer, the data information related to the service from the access network device.

When the user plane network element locally provides the service for the terminal device, the access network device may forward, to the terminal device via the first radio bearer, related data information of the service provided by the user plane network element, and the user plane network element may send the related data information of the service to the access network device through a GTP-U packet. For example, if the user plane network element provides a rendering result of AR rendering for the terminal device, the user plane network element may send the rendering result to the access network device through the GTP-U packet. The access network device may parse the GTP-U packet to obtain the rendering result of the AR rendering, and send the rendering result to the terminal device via the first radio bearer.

When the access network device locally provides the service for the terminal device, the access network device directly sends the service-related data to the terminal device via the first radio bearer.

When both the access network device and the user plane network element locally provide the services for the terminal device, data related to the two services may also be sent to the terminal device via the first radio bearer.

It should be understood that in this embodiment of this application, the terminal device may alternatively send, to the user plane network element or the access network device, related data used by the user plane network element or the access network device to complete the service. For example, if the service is that the access network device sends an AI training model to the terminal device, the terminal device may send, to the access network device, sample data used for AI model training.

It should be further understood that when both S703a and S703b exist, an execution sequence of S703a and S703b and an execution sequence of S704 and S705 are not limited in embodiments of this application.

According to the communication method shown in FIG. 7, the session management network element obtains, based on the first indication information, the QoS information corresponding to the service provided by the access network device and/or the user plane network element for the terminal device, and sends the QoS information to the access network device and/or the user plane network element, so that the access network device establishes a radio bearer that is between the access network device and the terminal device and that is used for the service, and/or the user plane network element establishes a tunnel that is between the user plane network element and the access network device and that is used for the service, to implement the requirement for providing the local service for the terminal device by the access network device and/or the user plane network element. Compared with providing a data service by a data network, this reduces a signaling interaction process, and can improve service efficiency. In addition, a node that provides the service is closer to a user, so that a transmission delay can be reduced, reliability can be improved, and quality of service can be ensured.

The following describes in detail the communication method shown in FIG. 7 with reference to a 5G system. The terminal device is UE, the access network device is a gNB, the user plane network element is a UPF, and the session management network element is an SMF. An example in which both the UPF and the gNB locally provide services for the UE is used for description.

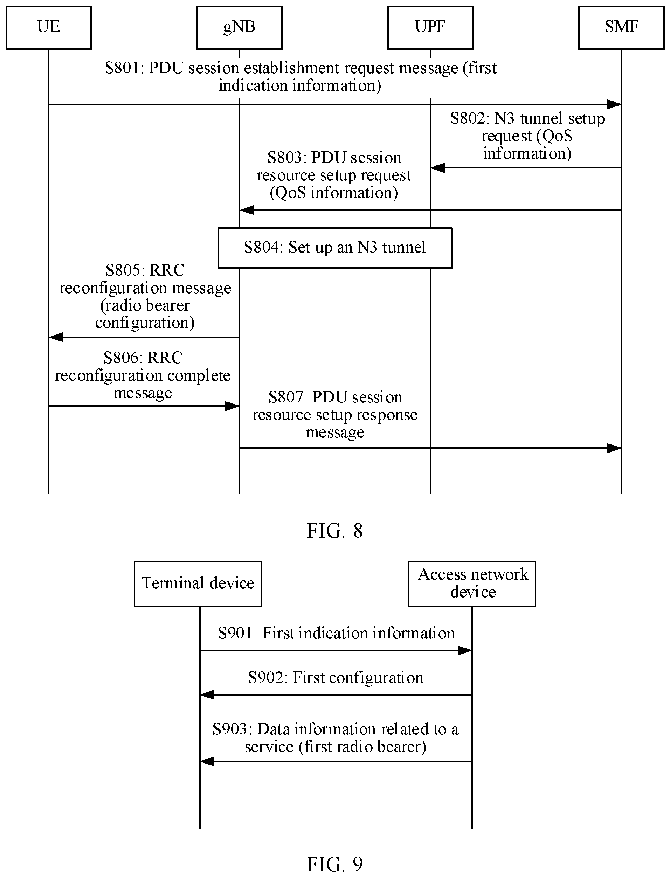

For example, FIG. 8 is a schematic flowchart of a communication method according to an embodiment of this application. As shown in FIG. 8, the method includes the following steps.

S801: The UE sends a PDU session establishment request (PDU Session Establishment Request) message to the SMF. Correspondingly, the SMF receives the PDU session establishment request message from the UE.

The PDU session establishment request message carries first indication information, to indicate services provided by the gNB and the UPF for the terminal device. For example, the gNB provides an AI inference model for the UE, and the UPF provides an AR rendering result for the UE. For related descriptions of the first indication information, refer to the related descriptions in S701. Details are not described herein again.

After obtaining the first indication information, the SMF negotiates with a UDM based on the service indicated by the first indication information to obtain user subscription data information of the UE, and obtains QoS information corresponding to the service from a PCF. For example, QoS information corresponding to the AI inference model provided by the gNB for the UE includes a requirement on a computing capability of the gNB for obtaining the AI inference model and a delay requirement for transmitting the AI inference model, and QoS information corresponding to the AR rendering result provided by the UPF for the UE includes a requirement on computing precision of AR rendering performed by the UPF and a delay requirement for transmitting the AR rendering result.

The requirement on the computing capability of the gNB for obtaining the AI inference model may be a computational power capability requirement on the gNB to calculate the AI inference model. The delay requirement for transmitting the AI inference model may be a requirement on a delay from sending the AI inference model by the gNB to receiving the AI inference model by the UE. The requirement on the computing precision of AR rendering performed by the UPF may be an accuracy requirement or a precision requirement on the AR rendering result. The delay requirement for transmitting the AR rendering result may be a requirement on a delay from sending the AR rendering result by the UPF to receiving the AR rendering result by the UE, that is, include a delay requirement on transmission between the UPF and the gNB and a delay requirement on transmission between the gNB and the UE.

Therefore, after obtaining the QoS information corresponding to the AI inference model provided by the gNB for the UE and the QoS information corresponding to the AR rendering result provided by the UPF for the UE, the SMF separately sends the QoS information to the gNB and the UPF, for example, performs the following S802 and S803.

S802: The SMF sends an N3 tunnel setup request (N3 Tunnel Setup Request) message to the UPF. Correspondingly, the UPF receives the N3 tunnel setup request message from the SMF.

The N3 tunnel setup request message carries the QoS information corresponding to the AR rendering result provided by the UPF for the UE. Therefore, the UPF may determine, based on the requirement on the computing precision in the QoS information, whether computing precision of the UPF meets a requirement, and when the computing precision meets the requirement, determine configuration information such as a routing rule and congestion avoidance based on the delay requirement in the QoS information.

S803: The SMF sends a PDU session resource setup request (PDU Session Resource Setup Request) message to the gNB. Correspondingly, the gNB receives the session resource setup request message from the SMF.

The PDU session resource setup request message includes the QoS information corresponding to the AI inference model provided by the gNB for the UE. Because the UPF needs to provide a service for the UE, the message may also carry the QoS information corresponding to the AR rendering result provided by the UPF for the UE. Therefore, the gNB may separately establish different radio bearers based on QoS information of different services, to complete data transmission of the different services.

S804: The UPF sets up an N3 tunnel with the gNB.

For example, the UPF may send, to the gNB, tunnel setup related configuration information determined based on the QoS information, to complete setup of the N3 tunnel that is between the gNB and the UPF and that is used to transmit the AR rendering result.

S805: The gNB sends an RRC reconfiguration (RRC Reconfiguration) message to the UE. Correspondingly, the UE receives the RRC reconfiguration message from the gNB.

The RRC reconfiguration message includes a radio bearer configuration used to transmit the AR rendering result and a radio bearer configuration used to transmit the AI inference model. After receiving the radio bearer configurations, the UE may complete, based on the radio bearer configurations, establishment of a radio bearer that is between the UE and the gNB and that is used to transmit the AR rendering result, and establishment of a radio bearer used to transmit the AI inference model.

S806: The UE sends an RRC reconfiguration complete (RRC Reconfiguration Complete) message to the gNB. Correspondingly, the gNB receives the RRC reconfiguration complete message from the UE.

The RRC reconfiguration complete message includes indication information #1 and indication information #2, the indication information #1 indicates that the UE completes the establishment of the radio bearer used to transmit the AR rendering result, and the indication information #2 indicates that the UE completes the establishment of the radio bearer used to transmit the AI inference model.

S807: The gNB sends a PDU session resource setup response (PDU Session Resource Setup Response) message to the SMF. Correspondingly, the SMF receives the PDU session resource setup response message from the gNB.

The PDU session resource setup response message carries indication information #3 and indication information #4, the indication information #3 indicates that the radio bearer that is between the gNB and the UE and that is used to transmit the AR rendering result is successfully established, and the indication information #4 indicates that the radio bearer that is between the gNB and the UE and that is used to transmit the AI inference model is successfully established.

In other words, after completing the establishment of the radio bearers used to transmit the AR rendering result and the AI inference model, the gNB may notify the SMF that the establishment of the radio bearers used for the services is completed.

Therefore, after completing the radio bearer establishment and the tunnel setup, the gNB and the UPF may send the AR rendering result and the AI inference model to the UE.

It should be understood that an execution sequence of S802 and S803 and an execution sequence of S804 and S805 are not limited in embodiments of this application.

FIG. 8 shows an interaction procedure in which the UE triggers, based on the PDU session request, the SMF to obtain the QoS information, to indicate the gNB and the UPF to provide the local services. In addition, the UE may alternatively directly trigger the gNB and/or the UPF to provide the local service.

For example, FIG. 9 is a schematic flowchart of a communication method according to an embodiment of this application. As shown in FIG. 9, the method includes the following steps.

S901: A terminal device sends first indication information.

In a possible design solution, the terminal device sends the first indication information to a session management network element. Correspondingly, the session management network element receives the first indication information from the terminal device. In this design solution, for specific descriptions of the first indication information and a procedure in which an access network device provides a local service and/or a user plane network element provides a local service, refer to the related descriptions in S701 to S706. Details are not described herein again.

In another possible design solution, the terminal device sends the first indication information to the access network device. Correspondingly, the access network device receives the first indication information from the terminal device. In this design solution, the terminal device directly triggers the access network device to provide the local service. The communication procedure shown in FIG. 9 is mainly a procedure in which the terminal device directly triggers the access network device to provide the service.

In this design solution, the first indication information may be carried in an RRC message. For example, in an initial random access procedure of the terminal device, the terminal device includes the first indication information in an RRC setup request (RRC Setup Request) message (initial access Msg3). For another example, after performing random access, the terminal device includes the first indication information in an RRC setup complete (RRC Setup Complete) message (Msg5).

In this design solution, the terminal device may further send QoS information corresponding to the service to the access network device. Correspondingly, the access network device receives the QoS information corresponding to the service from the terminal device. In other words, the terminal device may configure QoS information of the required service, to indicate the access network device to establish a radio bearer used for the service. For specific descriptions of the QoS information corresponding to the service, refer to the related descriptions in S702. Details are not described herein again.

In a possible implementation, the first indication information and the QoS information may be carried in a same message. For example, the first indication information and the QoS information are carried in an RRC setup request for sending, to reduce signaling overheads.

In a possible implementation, the access network device and the terminal device each may include a computing resource control entity, for example, the CRC layer in the protocol stack architecture shown in FIG. 4A or FIG. 4C. The computing resource control entity is configured to process control information and/or data information related to the service. In this case, the first indication information may be carried in a CRC message for sending.

Similarly, the terminal device may further send the first indication information to the user plane network element, to indicate the user plane network element to provide the local service for the terminal device. It should be understood that when the terminal device sends the first indication information to the user plane network element, the first indication information may be forwarded to the user plane network element through the access network device.

S902: The access network device sends a first configuration to the terminal device. Correspondingly, the terminal device receives the first configuration from the access network device.

The access network device determines the first configuration based on the QoS information corresponding to the service. For specific descriptions of S902, refer to the related descriptions in S704. Details are not described herein again.

When the terminal device sends the first indication information to the session management network element, the access network device receives the QoS information corresponding to the service from the session management network element, and determines the first configuration based on the QoS information. For a specific implementation process in which the access network device obtains the QoS information from the session management network element, refer to the related descriptions in S702 and S703. Details are not described herein again.

When the terminal device sends the first indication information to the access network device, the access network device receives the QoS information corresponding to the service from the terminal device, and determines the first configuration based on the QoS information.

S903: The access network device sends, via a first radio bearer, the data information related to the service to the terminal device. Correspondingly, the terminal device receives, via the first radio bearer, the data information related to the service from the access network device.

For specific descriptions of S903, refer to the related descriptions in S706. Details are not described herein again.

According to the communication method shown in FIG. 9, the terminal device may directly or indirectly trigger, by sending the first indication information, the access network device and/or the user plane network element to provide the local service. A node that provides the service is closer to a user, so that a transmission delay can be reduced, reliability can be improved, and quality of service can be ensured.

The following describes in detail the communication method shown in FIG. 9 with reference to a 5G system. The terminal device is UE, and the access network device is a gNB. An example in which a service locally provided by the gNB for the UE is an AI rendering result is used for description.

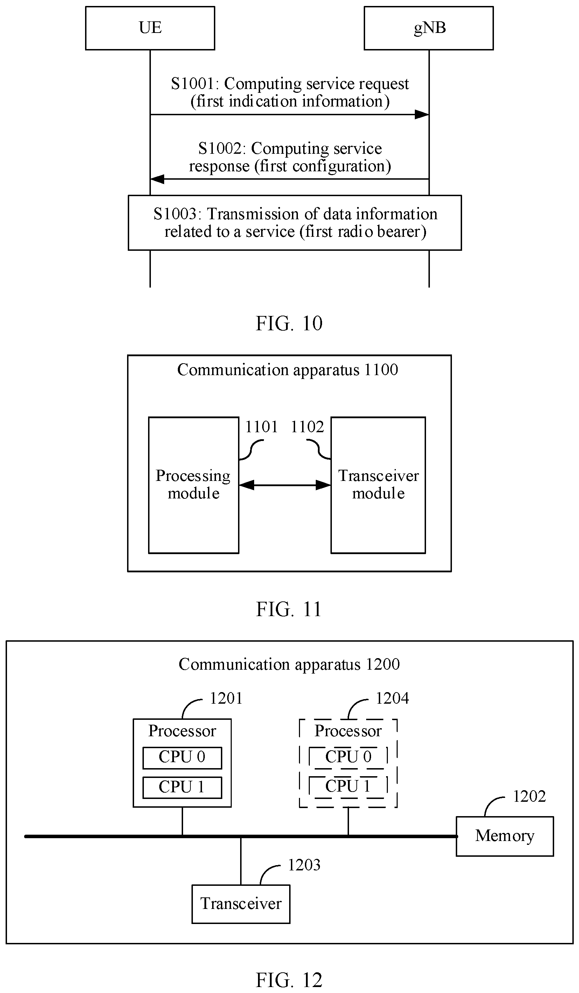

For example, FIG. 10 is a schematic flowchart of a communication method according to an embodiment of this application. As shown in FIG. 10, the method includes the following steps.

S1001: The UE sends a computing service request to the gNB. Correspondingly, the gNB receives the computing service request from the UE.

The computing service request includes first indication information and QoS information corresponding to the service. The first indication information indicates the service provided by the gNB for the UE. For example, the gNB provides the AR rendering result for the UE. The QoS information corresponding to the service includes a requirement on computing precision of AR rendering performed by a UPF and a delay requirement for transmitting the AR rendering result. For example, the computing service request may be an RRC setup request message (Msg3), which is transmitted through an SRB0, or the computing service request may be an RRC setup complete message (Msg5), which is transmitted through an SRB1.

S1002: The gNB sends a computing service response to the UE. Correspondingly, the UE receives the computing service response from the gNB.

The computing service response includes a first configuration, where the first configuration is used by the UE to establish a first radio bearer like an SRB, a DRB, or a CRB between the UE and the gNB for transmitting the AR rendering result. For example, the computing service response may be an RRC setup message, which is transmitted through the SRB0, or the computing service response may be an RRC reconfiguration message, which is transmitted through the SRB1.

For specific descriptions of the first configuration in S1002, refer to the related descriptions in S704. Details are not described herein again.

S1003: The gNB and the UE perform, via the first radio bearer, transmission of data information related to a service.

For example, after the first radio bearer is established between the gNB and the UE, the gNB may send the AR rendering result to the UE via the first radio bearer.

According to the communication method shown in FIG. 10, the UE sends the first indication information to the gNB, to trigger the gNB to provide the local service for the terminal device.

It may be understood that, in the foregoing embodiments, the method and/or the steps implemented by the session management network element may alternatively be implemented by a part (for example, a processor, a chip, a chip system, a circuit, a logical module, or software) that can be used in the session management network element. The method and/or the steps implemented by the terminal device may alternatively be implemented by a part (for example, a processor, a chip, a chip system, a circuit, a logical module, or software) that can be used in the terminal device. The method and/or the steps implemented by the access network device may alternatively be implemented by a part (for example, a processor, a chip, a chip system, a circuit, a logical module, or software) that can be used in the access network device.

The foregoing mainly describes the solutions provided in this application. Correspondingly, this application further provides a communication apparatus. The communication apparatus is configured to implement the methods in the method embodiments. The communication apparatus may be the session management network element in the foregoing method embodiments, or an apparatus including the session management network element, or a part that can be used in the session management network element, for example, a chip or a chip system. Alternatively, the communication apparatus may be the terminal device in the foregoing method embodiments, an apparatus including the terminal device, or a part that can be used in the terminal device, for example, a chip or a chip system. Alternatively, the communication apparatus may be the access network device in the foregoing method embodiments, an apparatus including the access network device, or a part that can be used in the access network device, for example, a chip or a chip system.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that the division of the modules in embodiments of this application is an example, and is merely logical functional division, and other division may be used in an actual implementation.

For example, the communication apparatus is the session management network element, the terminal device, or the access network device in the foregoing method embodiments.

FIG. 11 is a diagram of a structure of a communication apparatus according to an embodiment of this application. As shown in FIG. 11, the communication apparatus 1100 includes a processing module 1101 and a transceiver module 1102. The processing module 1101 is configured to perform a processing function of the session management network element, the terminal device, or the access network device in the foregoing method embodiments. The transceiver module 1102 is configured to perform receiving and sending functions of the session management network element, the terminal device, or the access network device in the foregoing method embodiments.

All related content of the steps in the foregoing method embodiments may be cited in function descriptions of a corresponding functional module. Details are not described herein again.

Because the communication apparatus 1100 provided in this embodiment may perform the foregoing methods, for technical effect that can be obtained by the terminal device, refer to the foregoing method embodiments. Details are not described herein again.

In a possible design solution, in this embodiment of this application, the transceiver module 1102 may include a receiving module and a sending module (not shown in FIG. 11). The transceiver module is configured to implement the sending function and the receiving function of the communication apparatus 1100.

In a possible design solution, the communication apparatus 1100 may further include a storage module (not shown in FIG. 11), and the storage module stores a program or instructions. When the processing module 1101 executes the program or the instructions, the communication apparatus 1100 may perform a function of the session management network element, the terminal device, or the access network device in the method shown in any one of FIG. 7 to FIG. 10.

It should be understood that the processing module 1101 in the communication apparatus 1100 may be implemented by a processor or a processor-related circuit component, and may be a processor or a processing unit. The transceiver module 1102 may be implemented by a transceiver or a transceiver-related circuit component, and may be a transceiver or a transceiver unit.

For example, FIG. 12 is a diagram of a structure of another communication apparatus according to an embodiment of this application. The communication apparatus may be a session management network element, a terminal device, or an access network device, or may be a chip (system) or another part or component that may be disposed in the session management network element, the terminal device, or the access network device. As shown in FIG. 12, the communication apparatus 1200 may include a processor 1201. In a possible design solution, the communication apparatus 1200 may further include a memory 1202 and/or a transceiver 1203. The processor 1201 is coupled to the memory 1202 and the transceiver 1203, for example, may be connected to the memory and the transceiver through a communication bus.

The following specifically describes the components of the communication apparatus 1200 with reference to FIG. 12.

The processor 1201 is a control center of the communication apparatus 1200, and may be a processor or a generic term of a plurality of processing elements. For example, the processor 1201 is one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

In a possible design solution, the processor 1201 may perform various functions of the communication apparatus 1200 by running or executing a software program stored in the memory 1202 and invoking data stored in the memory 1202.

In a specific implementation, in an embodiment, the processor 1201 may include one or more CPUs, for example, a CPU 0 and a CPU 1 shown in FIG. 12.

In a specific implementation, in an embodiment, the communication apparatus 1200 may alternatively include a plurality of processors, for example, the processor 1201 and a processor 1204 shown in FIG. 12. Each of the processors may be a single-core processor (single-CPU) or a multi-core processor (multi-CPU). The processor herein may be one or more devices, circuits, and/or processing cores configured to process data (for example, computer program instructions).

The memory 1202 is configured to store the software program for performing the solutions in this application, and the processor 1201 controls execution. For a specific implementation, refer to the foregoing method embodiments. Details are not described herein again.

In a possible design solution, the memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1202 may be integrated with the processor 1201, or may exist independently, and is coupled to the processor 1201 through an interface circuit (not shown in FIG. 12) of the communication apparatus 1200. This is not specifically limited in embodiments of this application.

The transceiver 1203 is configured for communication with another communication apparatus. For example, the communication apparatus 1200 is a terminal device, and the transceiver 1203 may be configured to communicate with a network device or communicate with another terminal device. For another example, the communication apparatus 1200 is a network device, and the transceiver 1203 may be configured to communicate with a terminal device or communicate with another network device.

In a possible design solution, the transceiver 1203 may include a receiver and a transmitter (not separately shown in FIG. 12). The receiver is configured to implement a receiving function, and the transmitter is configured to implement a sending function.

In a possible design solution, the transceiver 1203 may be integrated with the processor 1201, or may exist independently, and is coupled to the processor 1201 through an interface circuit (not shown in FIG. 12) of the communication apparatus 1200. This is not specifically limited in embodiments of this application.

It should be noted that the structure of the communication apparatus 1200 shown in FIG. 12 does not constitute a limitation on the communication apparatus. An actual communication apparatus may include more or fewer parts than those shown in the figure, combine some parts, or have different part arrangements.

In addition, for technical effect of the communication apparatus 1200, refer to the technical effect of the methods in the foregoing method embodiments. Details are not described herein again.

An embodiment of this application further provides a computer-readable storage medium. The computer-readable storage medium stores a computer program or instructions. When the computer program or the instructions are executed by a computer, functions of the foregoing method embodiments are implemented.

An embodiment of this application further provides a computer program product. When the computer program product is executed by a computer, functions of the foregoing method embodiments are implemented.

All or some of the foregoing embodiments may be implemented by using software, hardware, firmware, or any combination thereof. When a software program is used for implementation, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

## Claims

1. A communication method, wherein the method comprises:
obtaining first indication information, wherein the first indication information indicates a service provided by an access network device and/or a user plane network element for a terminal device;
obtaining, based on the first indication information, quality of service QoS information corresponding to the service; and
sending the QoS information to the access network device and/or the user plane network element.

2. The method according to claim 1, wherein obtaining the first indication information comprises:
receiving the first indication information from the terminal device.

3. The method according to claim 2, wherein receiving the first indication information from the terminal device comprises:
receiving a session establishment request message from the terminal device, wherein the session establishment request message comprises the first indication information, and the session establishment request message is used by the terminal device to request to establish a session for the service.

4. The method according to any one of claims 1 to 3, wherein the method further comprises:
receiving second indication information from the access network device, wherein the second indication information indicates that a first radio bearer that is between the access network device and the terminal device and that is used for the service is successfully established.

5. A communication method, wherein the method comprises:
sending first indication information, wherein the first indication information indicates a service provided by an access network device and/or a user plane network element for a terminal device; and
receiving a first configuration from the access network device, wherein the first configuration is used to configure the terminal device to establish a first radio bearer that is between the terminal device and the access network device and that is used for the service.

6. The method according to claim 5, wherein sending the first indication information comprises:
sending the first indication information to a session management network element.

7. The method according to claim 6, wherein sending the first indication information to the session management network element comprises:
sending a session establishment request message to the session management network element, wherein the session establishment request message comprises the first indication information, and the session establishment request message is used by the terminal device to request to establish a session for the service.

8. The method according to claim 5, wherein sending the first indication information comprises:
sending the first indication information to the access network device.

9. The method according to claim 8, wherein the method further comprises:
sending QoS information corresponding to the service to the access network device.

10. The method according to any one of claims 5 to 9, wherein the terminal device and the access network device comprise a computing resource control entity, and the computing resource control entity is configured to encapsulate control information and/or data information related to the service.

11. The method according to any one of claims 5 to 10, wherein the method further comprises:
receiving, by the terminal device via the first radio bearer, the data information related to the service from the access network device.

12. A communication method, wherein the method comprises:
obtaining quality of service QoS information corresponding to a service, wherein the service is provided by an access network device for a terminal device; and
sending a first configuration to the terminal device, wherein the first configuration is determined based on the QoS information, and the first configuration is used to configure the terminal device to establish a first radio bearer that is between the terminal device and the access network device and that is used for the service.

13. The method according to claim 12, wherein obtaining the QoS information corresponding to the service comprises:
receiving, from a session management network element, the QoS information corresponding to the service.

14. The method according to claim 13, wherein the method further comprises:
sending second indication information to the session management network element, wherein the second indication information indicates that the first radio bearer that is between the access network device and the terminal device and that is used for the service is successfully established.

15. The method according to claim 12, wherein obtaining the QoS information corresponding to the service comprises:
receiving, from the terminal device, the QoS information corresponding to the service.

16. The method according to claim 15, wherein the method further comprises:
receiving first indication information from the terminal device, wherein the first indication information indicates the service provided by the access network device for the terminal device.

17. The method according to any one of claims 12 to 15, wherein the terminal device and the access network device comprise a computing resource control entity, and the computing resource control entity is configured to process control information and/or data information related to the service.

18. The method according to any one of claims 12 to 17, wherein the method further comprises:
sending, via the first radio bearer, the data information related to the service to the terminal device.

19. The method according to any one of claims 8, 9, and 16 to 18, wherein the first indication information and/or the first configuration are/is transmitted via a second radio bearer, the second radio bearer is at least one of a signaling radio bearer or a computing radio bearer, and the computing radio bearer is used to transmit the control information and/or data information related to the service.

20. The method according to claim 19, wherein the second radio bearer is a common signaling radio bearer, and the common signaling radio bearer is used to transmit all control information related to the service.

21. The method according to any one of claims 1 to 4, 9, and 12 to 20, wherein the QoS information comprises computational power requirement information for executing the service and data transmission requirement information for executing the service.

22. The method according to any one of claims 4, 5 to 11, and 12 to 20, wherein the first radio bearer comprises at least one of a data radio bearer, a signaling radio bearer, or a computing radio bearer, and the computing radio bearer is used to transmit the control information and/or data information related to the service.

23. The method according to any one of claims 1 to 22, wherein the service comprises: executing, by the access network device and/or a user plane network element, a compute task requested by the terminal device, and sending a result of the compute task to the terminal device; or
the service comprises: obtaining, by the access network device and/or the user plane network element, data or an artificial intelligence AI model requested by the terminal device, and sending the data or the AI model to the terminal device.

24. A communication apparatus, comprising a module configured to perform the method according to any one of claims 1 to 23.

25. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 23 through a logic circuit or by executing code instructions.

26. A communication apparatus, comprising a processor, wherein the processor is configured to run a computer program or instructions, to implement the method according to any one of claims 1 to 23.

27. A communication chip, wherein the communication chip stores instructions, and when the chip runs on a communication device, the method according to any one of claims 1 to 23 is implemented.

28. A computer-readable storage medium, wherein the storage medium stores a computer program or instructions, and when the computer program or the instructions are executed by a communication apparatus, the method according to any one of claims 1 to 23 is implemented.

29. A computer program product, comprising computer program code, wherein when the computer program code is run on a communication apparatus, the communication apparatus implements the method according to any one of claims 1 to 23.
